# EUROPÄISCHE PATENTSCHRIFT

(11) **EP 4 553 447 B1**
(45) Veröffentlichungstag und Bekanntmachung des Hinweises auf die Patenterteilung: **06.05.2026**
(21) Anmeldenummer: 23209176.9
(22) Anmeldetag: 10.11.2023
(51) Int. Cl.: G01B 21/04

(54) **VERFAHREN ZUM VERMESSEN EINES ZU VERMESSENDEN WERKSTÜCKS MITTELS EINES KOORDINATENMESSGERÄTS**
METHOD FOR MEASURING A WORKPIECE TO BE MEASURED BY MEANS OF A COORDINATE MEASURING DEVICE
PROCÉDÉ DE MESURE D'UNE PIÈCE À MESURER AU MOYEN D'UN APPAREIL DE MESURE DE COORDONNÉES

(43) Veröffentlichungstag der Anmeldung: 14.05.2025
(73) Patentinhaber: Carl Zeiss Industrielle Messtechnik GmbH, 73447 Oberkochen (DE)
(72) Erfinder: Eckardt, Nils, 73655 Plüderhausen (DE); Labbé-Laurent, Marcel, 73430 Aalen (DE); Schuell, Reiner, 73479 Ellwangen (DE)
(74) Vertreter: Brunotte, Joachim Wilhelm Eberhard

(56) Entgegenhaltungen:
- EP-A1- 3 882 568
- EP-B1- 3 794 310
- EP-B1- 3 835 900

## Beschreibung

Die Erfindung betrifft ein Verfahren zum Vermessen eines zu vermessenden Werkstücks mittels eines Koordinatenmessgeräts. Unter einem Werkstück wird insbesondere auch eine Anordnung miteinander verbundener Teile verstanden. Insbesondere betrifft die Erfindung die automatische Erstellung eines Messablaufs zur Vermessung eines Werkstücks. Eine automatische Erstellung schließt nicht aus, dass Teile des Messablaufs optional von einer Person überprüft und/oder verändert werden.

Bei der Vermessung eines Werkstücks werden Koordinaten des Werkstücks unter Verwendung von zumindest einem Koordinatenmessgerät ermittelt. Konkrete Ausgestaltungen des erfindungsgemäßen Verfahrens enthalten daher den Vorgang der Vermessung des Werkstücks und der Ermittlung der Koordinaten des zu vermessenden Werkstücks oder eines typgleichen Werkstücks aus Messdaten.

Unter den Begriff Koordinatenmessgerät fallen jegliche Arten von Geräten, mit denen sich Koordinaten von Werkstücken ermitteln lassen. Bei einer Klasse von Koordinatenmessgeräten handelt es sich bei den Koordinaten um Oberflächenkoordinaten, d. h es werden Koordinaten von Oberflächenpunkten von Werkstücken ermittelt. Eine andere Klasse von Koordinatenmessgeräten ist alternativ oder zusätzlich in der Lage, Koordinaten im Inneren von Werkstücken zu ermitteln. Hierzu gehören Koordinatenmessgeräte, die invasive, in den Werkstoff des Werkstücks eindringende Strahlung nutzen und insbesondere die Intensität der durch das Werkstück hindurchtretenden Strahlung messen. Typischerweise wird das Werkstück aus verschiedenen Richtungen durchstrahlt und wird anhand der Ergebnisse der Durchstrahlung eine insbesondere computergestützte Rekonstruktion des erfassten Werkstücks durchgeführt. Derartige Verfahren werden auch als Computertomografie (CT) bezeichnet. Unter den Begriff Koordinatenmessgerät fallen aber auch klassische Koordinatenmessgeräte, zum Beispiel Geräte in Portalbauweise oder Gantrybauweise, insbesondere Koordinatenmessgeräte mit einer verfahrbaren Brücke, an der insbesondere eine Pinole mit relativ zur Brücke verfahrbarem Sensor montiert ist, Gelenkarmgeräte und Geräte mit einer Hexapodenmechanik. Ferner fallen darunter Geräte, dessen zumindest einer Sensor bezüglich zumindest einem Freiheitsgrad der Relativbewegung von Sensor und Messobjekt fest positioniert ist und bei denen das zu vermessende Werkstück relativ zu dem zumindest einen Sensor beweglich ist, wie z. B. bei einem Gerät mit beweglichem Messtisch. Auch sind von dem Begriff Koordinatenmessgerät Maschinen erfasst, die zwar nicht primär als Koordinatenmessgeräte konzipiert sind, die aber so eingerichtet sind, wie ein Koordinatenmessgerät zu arbeiten. Insbesondere weisen diese Maschinen zumindest einen Messsensor auf, der für die Ermittlung der Koordinaten genutzt wird. Bekannt sind beispielsweise Roboter, zum Beispiel Gelenkarm-Roboter, an denen anstelle eines Werkzeugs oder zusätzlich zu einem Werkzeug ein Sensor zur Erfassung der Werkstückoberfläche (beispielsweise ein Streifenprojektionssensor) befestigt ist, oder Werkzeugmaschinen, an denen anstelle eines Bearbeitungswerkzeugs oder zusätzlich zu einem Bearbeitungswerkzeug ein Messsensor (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist.

Auch personengeführte (zum Beispiel handgeführte) Sensoren zur Erfassung eines Werkstücks sind bekannt, wobei der zumindest eine Sensor optional an einer beweglichen Mechanik angeordnet ist. In diesem Fall fehlt ein motorischer Antrieb für die Erzeugung der Bewegung des Sensors. Stattdessen wird die Bewegung durch eine Person bewirkt. Sowohl eine scannende Erfassung des Messobjekts als auch eine Erfassung jeweils aus einer festen Position bei fester Ausrichtung des Sensors ist möglich. Bei personengeführten Sensoren wird vielfach das Triangulationsprinzip angewandt: zum Beispiel wird ein bekanntes Muster auf das Messobjekt projiziert und wird unter einem anderen Blickwinkel auf die Oberfläche zumindest ein Bild des Messobjekts aufgenommen. Statt der Projektion eines Musters kann bei der Anwendung des Triangulationsprinzips auch Laserstrahlung verwendet werden. Insbesondere der Ort des Empfangs der reflektierten Laserstrahlung enthält eine Information über Oberflächenkoordinaten des Messobjekts. Es sind jedoch auch Geräte mit einem personengeführten Sensor bekannt, die zumindest einen Motor zur Unterstützung der Bewegung und/oder der Positionierung des Sensors aufweisen.

Auch bezüglich der Arten von Sensoren, die von einem Koordinatenmessgerät zur Ermittlung der Koordinaten verwendet werden, ist die Erfindung nicht beschränkt. Es wurden bereits taktile Sensoren als Beispiel erwähnt, bei denen es sich zum Beispiel um solche vom schaltenden Typ oder vom messenden Typ handeln kann. Bei den taktilen Sensoren kann es sich insbesondere um passive oder aktive Sensoren handeln. Aktive Sensoren können ausgestaltet sein, eine Antastkraft zu erzeugen, mit der ein taktiler Taster eine Oberfläche eines zu vermessenden Werkstücks antastet. Häufig werden alternativ oder zusätzlich optische Sensoren eingesetzt, z. B. beispielsweise ein Projektionssensor, insbesondere ein Streifenprojektionssensor, ein Laser-Triangulationssensor, eine Zeilenkamera, eine Kamera zur Erfassung zweidimensionaler Bilder, eine Kamera zur Erfassung dreidimensionaler Bilder, eine Anordnung mit zumindest zwei Kameras oder ein konfokaler, chromatischer Sensor. Ferner gibt es zum Beispiel kapazitive Sensoren und induktive Sensoren.

Unter den Begriff Koordinatenmessgerät fallen daher auch 3D-Scanner. Hier sind wie oben erwähnt, aber nicht auf personengeführte Sensoren beschränkt, zum Beispiel triangulationsbasierte Systeme, wie Laserscanner und Projektionssensoren besonders vorteilhaft, da diese in kurzer Zeit viele Messpunkte mit ihren 3D-Koordinaten erzeugen können. Projektionssensoren projizieren ein flächenhaftes Muster, z.B. Streifenmuster, auf das Messobjekt und nehmen Bilder des Messobjektes mitsamt dem projizierten Muster mit mindestens einer Bildaufnahmeeinheit (Kamera) auf. Durch Auswertung der Bildaufnahmen können die 3D-Koordinaten von Oberflächenpunkten des Messobjektes bestimmt werden. Um ein Messobjekt bzw. die Messobjektoberfläche vollständig zu erfassen, genügt oft nicht nur eine Messposition, so dass die Relativposition vom 3D-Scanner zum Messobjekt meist mehrfach verändert wird. Diese Positionierung kann dabei manuell (handgehalten) erfolgen, oder auch halb-automatisiert oder automatisiert zum Beispiel durch Führen des 3D-Scanners mit einem Roboter. Auch oder zusätzlich kann die Positionsänderung durch eine Bewegung des Objektes relativ zum 3D-Scanner, zum Beispiel durch einen Drehtisch, realisiert werden.

Typgleiche Werkstücke können nach demselben Prüfplan vermessen und geprüft werden. Zur Vorbereitung der Vermessung und der Auswertung der durch die Vermessung des Werkstücks gewonnenen Messdaten ist es bekannt, einen Prüfplan aufzustellen, wobei aus den Messdaten zu bestimmende Prüfmerkmale der Werkstücke definiert und als Teil des Prüfplans in diesen aufgenommen werden. Aus den Prüfmerkmalen kann wiederum eine Messvorschrift erzeugt wird. Die Messvorschrift gibt vor, welche Messpunkte eines Werkstücks von einem Koordinatenmessgerät zu vermessen sind, um ein einzelnes Prüfmerkmal, eine Mehrzahl von Prüfmerkmal oder alle zu ermittelnden Prüfmerkmale ermitteln zu können. Zu dem Verfahren gehören daher auch Ausgestaltungen, bei denen für zumindest ein Prüfmerkmal eines Werkstücks eine Messvorschrift erzeugt wird, die die zu vermessenden Messpunkte des Werkstücks vorgibt. Die Messvorschrift kann wie im Fall eines Messplans bereits alle für die Steuerung eines Messsensors eines konkreten Koordinatenmessgerät-Typs notwendigen Informationen enthalten oder Messpunkte vorgegeben, die mittels zumindest eines von verschiedenen Typen von Koordinatenmessgeräten und/oder verschiedenen Typen von Messsensoren vermessen werden können.

Ein Prüfplan definiert insbesondere einen Prüfprozesses, durch dessen Ausführung die Qualität eines zu vermessenden Werkstücks festgestellt werden kann. Ein derartiger Prüfplan kann beispielsweise anhand bestimmter allgemeiner Normen oder Hersteller- oder Kundenvorgaben festgelegt werden.

Der Prüfplan oder ein daraus abgeleiteter Messplan kann Programmanweisungen und/oder einen Algorithmus aufweisen, die/der ein Koordinatenmessgerät und zumindest einen Messrechner veranlassen/veranlasst, den Prüfprozess gemäß dem Prüfplan auszuführen und insbesondere die Prüfmerkmale in Bezug auf das vermessene Werkstück zu ermitteln, d.h. in der Regel jeweils zumindest einen Wert des Prüfmerkmals zu ermitteln.

Allgemein kann der Prüfplan und/oder der Messplan eine Datei oder ein Computerprogramm sein, die/das von einer Steuereinrichtung lesbar und/oder ausführbar ist, wobei die Steuereinrichtung insbesondere die Steuereinrichtung eines Koordinatenmessgeräts und/oder zumindest eines Messrechners ist, der die von dem Koordinatenmessgerät erzeugten Messdaten auswertet, um die Prüfmerkmale zu ermitteln. Insbesondere der Prüfplan kann jedoch auch lediglich eine Liste von Prüfmerkmal oder eine erweiterte Liste von Prüfmerkmal sein. Im einfachsten Fall kann die Liste ein einziges Prüfmerkmal aufweisen. In jedem Fall ist ein Prüfplan jedoch eine Vorschrift in Bezug auf die Vermessung eines zu vermessenden Werkstücks und in Bezug auf die Auswertung der bei der Vermessung erhaltenen Messdaten zumindest durch Bestimmung eines Prüfmerkmals anhand der Messdaten.

Im allgemeinen Sprachgebrauch sind Prüfmerkmale Qualitätsmerkmale eines Prozesses oder Produkts. In der Koordinatenmesstechnik basieren Prüfmerkmale auf den unmittelbaren und mittelbaren Messergebnissen aus der Vermessung von Werkstücken. Typischerweise werden zunächst Koordinaten des jeweiligen Werkstücks durch dessen Vermessung mittels eines oder mehrerer Koordinatenmessgeräte ermittelt und wird dann für zumindest ein vordefiniertes Prüfmerkmal zumindest ein Wert des Prüfmerkmals ermittelt. In aller Regel werden für die Ermittlung des Prüfmerkmals die Koordinaten von mehr als einem Messpunkt oder zumindest einem Bereich des Werkstücks benötigt. Beispiele für Prüfmerkmale sind Geradheit, Ebenheit, Rundheit, Zylindrizität, Profil einer Linie, Profil einer Fläche, Position, Rechtwinkligkeit, Neigung, Parallelität, Symmetrie, Koaxialität, Konzentrizität, Rundlauf (radial), Planlauf (axial), Gesamtrundlauf (radial) und Gesamtplanlauf (axial). Dem Fachmann sind zahlreiche weitere Prüfmerkmale bekannt, wie z. B. Spalt- und Übergangsmaße. Um später prüfen zu können, ob ein Werkstück gemäß dem jeweiligen Prüfmerkmal den Erwartungen entspricht, ist in aller Regel eine zulässige Toleranz festgelegt. Auch wenn Prüfpläne wiederholt verwendet werden, kann die Höhe der zulässigen Toleranz in den einzelnen Fällen variieren. Ferner können die Verfahrensweisen zur Ermittlung eines Prüfmerkmals durch Auswertung von Koordinaten-Messdaten eines Werkstücks variieren. Optional können daher als Zusatzinformation zu dem jeweiligen Prüfmerkmal auch Festlegungen zu der Verfahrensweise getroffen werden. Das vorstehend Gesagte gilt insbesondere auch für Ausgestaltungen der unten beschriebenen Erfindung.

Mit der Auswahl und/oder Definition der Prüfmerkmale für einen Prüfplan ist Arbeitsaufwand verbunden, insbesondere wenn in Bezug auf einen konkreten Werkstücktyp und die Verifizierung von dessen technischer Spezifikation eine vollständige oder nahezu vollständige Liste von Prüfmerkmal erstellt werden soll. Im Allgemeinen und auch in Bezug auf die vorliegende Erfindung kann die technische Spezifikation zum Beispiel als CAD (Computer Aided Design) Modell mit PMI (Product Manufacturing Information) vorliegen. Aus einer solchen technischen Spezifikation lässt sich in vielen Fällen jedoch nicht die vollständige Liste von Prüfmerkmalen ableiten. Vielmehr werden zusätzliche Erfahrungen und Kenntnisse benötigt, um die Liste zu vervollständigen.

In WO 2016/150517 A1 wurde bereits vorgeschlagen, einen Bediener dabei zu unterstützen. Es wird eine Datenbank bereitgestellt, die eine Vielzahl von vordefinierten Messelementen und eine Vielzahl von typischen Prüfmerkmalen zu den vordefinierten Messelementen enthält. Jedes typische Prüfmerkmal repräsentiert eine definierte dimensionale Eigenschaft von zumindest einem vordefinierten Messelement. Außerdem wird eine bildliche Darstellung des Messobjekts bereitgestellt, die zumindest ein erstes Geometrieelement zeigt. Der Bediener kann das erste Geometrieelement anhand der bildlichen Darstellung selektieren. Anschließend werden ihm geeignete Prüfmerkmale für das selektierte erste Geometrieelement angezeigt. Dabei werden die geeigneten Prüfmerkmale aus der Vielzahl der typischen Prüfmerkmale in der Datenbank bestimmt, indem das selektierte erste Geometrieelement einem typgleichen vordefinierten Messelement zugeordnet wird. Der Bediener kann ein angezeigtes geeignetes Prüfmerkmal selektieren. In Abhängigkeit von dem selektierten Prüfmerkmal wird ein definierter Messablauf erstellt. In einer konkreten Ausgestaltung werden dem Bediener geeignete Verknüpfungselemente für die automatische Erstellung eines definierten Messablaufs angeboten, sobald mindestens zwei Geometrieelemente in der bildlichen Darstellung des Messobjekts selektiert wurden. Vorzugsweise erfolgt die Anzeige von geeigneten Prüfmerkmalen und die Anzeige von geeigneten Verknüpfungselementen zeitgleich, so dass der Bediener durch Selektieren von Prüfmerkmalen und Verknüpfungselementen in einer Darstellung zu einem komplexen Messablauf kommt.

EP 3 794 310 B1 beschreibt die Erzeugung eines Prüfplans für die Prüfung eines Messobjekts, wobei ein das Messobjekt repräsentierender Datensatz bereitgestellt wird, wobei datenbasiert eine Referenzstruktur festgelegt wird, wobei der Referenzstruktur mindestens ein referenzstrukturspezifisches Prüfmerkmal zugeordnet wird, wobei für den das Messobjekt repräsentierenden Datensatz datenbasiert geprüft wird, ob zur Referenzstruktur ähnliche oder gleiche Strukturen vorhanden sind, wobei jeder ähnlichen oder gleichen Struktur das referenzstrukturspezifische Prüfmerkmal als strukturspezifisches Prüfmerkmal zugeordnet wird, wobei der Prüfplan die derart bestimmten strukturspezifischen Prüfmerkmale umfasst.

EP 3 835 900 A1 offenbart ein Verfahren zur Vermessung von Werkstücken, wobei jedes der Werkstücke mehrere strukturelle Merkmale aufweist, die bei den anderen Werkstücken in gleicher Weise vorhanden sind, und welche zu vermessende Prüfmerkmale sind. Ein Prüfplan kann optimierte Verfahrbewegungen eines Messsensors zwischen einzelnen Messpunkten vorgeben, sodass eine Messzeit möglichst gering sein kann.

In EP 3 882 568 A1 wird ein computerimplementiertes Verfahren zum automatischen Erstellen mindestens eines Prüfplans zur Vermessung mindestens eines Messobjekts vorgeschlagen.

Es ist eine Aufgabe der vorliegenden Erfindung, die Ermittlung zumindest eines Prüfmerkmals zur Aufnahme in einen Prüfplan zu erleichtern.

Die beigefügten Patentansprüche definieren den Schutzumfang.

Es wird vorgeschlagen, dass vorab in einer Datenbank Datensätze gespeichert werden, die Daten über zumindest zwei Geometrieelemente eines Werkstücks und über zumindest eine geometrische Beziehung der zumindest zwei Geometrieelemente in Bezug aufeinander aufweisen.

Erfindungsgemäß handelt sich bei der geometrischen Beziehung um eine dimensionale Beziehung, also um eine in Bezug auf eine Dimension oder mehrere Dimensionen eines Größensystems definierte Beziehung. Beispiele für Dimensionen sind Längen (zum Beispiel Abstände, Abmessungen, Durchmesser), Flächen (z. B. von Oberflächenbereichen), Volumen (z. B. Teilvolumen von Werkstücken), Winkel (z. B. von zwei Kanten oder zwei Ebenen eingeschlossene Winkel oder Winkel als Maß für die Größe von Kreissegmenten) und Krümmungsradien (zum Beispiel von Kanten). Für die Dimension oder jeweils für die einzelnen Dimensionen ist es grundsätzlich möglich, einen Wert anzugeben. Daher kann bei Vorhandensein eines realen Werkstücks, aber auch bei Vorhandensein von ausreichenden Planungsdaten (zum Beispiel CAD-Daten, die als Grundlage für die Herstellung verwendet werden) eines Werkstücks bzw. eines Werkstücktyps, ein Wert der jeweiligen Dimension ermittelt werden, insbesondere unter Verwendung zumindest eines Koordinatenmessgeräts, das die Koordinaten von Messpunkten des Werkstücks ermittelt, oder durch Auswertung der Planungsdaten. Ein Beispiel dieses Falls ist ein Abstand zweier Geometrieelemente, zum Beispiel zweier paralleler Kanten bzw. der Linien, die diese parallelen Kanten repräsentieren. Die dimensionale Beziehung dieser parallelen Linien kann definieren, dass der Abstand einen bestimmten Wert haben muss. Die dimensionale Beziehung muss sich aber nicht in allen Fällen auf die Werte von Dimensionen beziehen, die ermittelt werden müssen, um das Vorhandensein der Geometrieelemente des Datensatzes festzustellen. Vielmehr kann die dimensionale Beziehung zum Beispiel in anderen Fällen das Verhältnis (zum Beispiel als Quotient oder in anderer Weise) einer Dimension des einen Geometrieelements zu einer Dimension des anderen Geometrieelements definieren. Ein einfaches Beispiel ist das Verhältnis der Längen des einen Geometrieelements und des anderen Geometrieelements. In Bezug auf das Beispiel der parallelen Linien kann auch das Verhältnis des Abstandes der beiden Linien zu der Länge zumindest einer der beiden Linien als dimensionale Beziehung definiert sein. An dieser Stelle soll jedoch betont werden, dass ein Datensatz auch Daten über mehr als zwei Geometrieelemente aufweisen kann (d. h. die Geometrieelemente mindestens so definiert, dass sie aus Messdaten des zu vermessenden Werkstücks oder aus den Planungsdaten des Werkstücks ermittelbar sind). Daher kann der Datensatz auch eine dimensionale Beziehung oder eine Mehrzahl von dimensionalen Beziehungen aufweisen, die sich auf mehr als zwei Geometrieelemente beziehen.

Außerdem weist der Datensatz zumindest ein den zumindest zwei Geometrieelementen zugeordnetes Prüfmerkmal auf, das in Bezug auf die zumindest zwei Geometrieelemente für das Werkstück prüfbar ist. In vielen Fällen weist der Datensatz auch beim Vorhandensein von lediglich zwei Geometrieelementen, über die der Datensatz Daten enthält, mehr als ein zugeordnetes Prüfmerkmal auf.

Ein solcher Datensatz erlaubt es festzustellen, ob das zu vermessende Werkstück die zumindest zwei Geometrieelemente und die zumindest eine geometrische Beziehung des Datensatzes aufweist. Wird dies festgestellt, dann kann das zugeordnete Prüfmerkmal oder zumindest eines der zugeordneten Prüfmerkmale automatisch in einen Prüfplan zur Prüfung des Werkstücks aufgenommen werden.

Die Erfindung ermöglicht es somit, anhand geometrisch dimensionaler Kriterien objektiv und automatisch zu ermitteln, ob in Bezug auf die Geometrie von grundsätzlich beliebigen Werkstücken vordefinierte Prüfmerkmale in den Prüfplan eines zu vermessenden Werkstücks aufgenommen werden oder nicht. Entspricht die Geometrie des zu vermessenden Werkstücks der in dem jeweiligen Datensatz definierten Geometrie, dann wird das Prüfmerkmal oder zumindest eines der zugeordneten Prüfmerkmale (und werden vorzugsweise alle durch den Datensatz zugeordneten Prüfmerkmale) in den Prüfplan übernommen. Somit können die Ergebnisse der früheren Erstellung von Prüfmerkmals-Listen ähnlicher Werkstücke automatisch für den Prüfplan des zu vermessenden Werkstücks genutzt werden. Dies betrifft insbesondere auch die Kombination mehrerer Prüfmerkmale. Wenn für ein ähnliches Werkstück eine solche Kombination bereits festgelegt wurde und zumindest ein entsprechender Datensatz erstellt wurde, dann kann bei ausreichender Übereinstimmung oder Ähnlichkeit des zu vermessenden Werkstücks auch eine solche Kombination von Prüfmerkmalen in den Prüfplan aufgenommen werden.

Die Identifizierung eines Prüfmerkmals oder einer Kombination von Prüfmerkmalen aus in einer Datenbank gespeicherten Datensätzen erlaubt es auch, zusätzliche, die Durchführung der Vermessung des Werkstücks betreffende Information ebenfalls zu identifizieren, sofern diese zusätzliche Information ebenfalls in der Datenbank gespeichert ist oder ein Hinweis auf diese zusätzliche Information in der Datenbank gespeichert ist. Insbesondere kann der Datensatz daher derartige zusätzliche Information und/oder einen Hinweis darauf enthalten. Der Hinweis ist so ausgestaltet, dass er es ermöglicht, auf die zusätzliche Information zuzugreifen. Insbesondere kann daher diese zusätzliche Information in den Prüfplan und/oder einen entsprechenden Messplan zur Vermessung des zu vermessenden Werkstücks oder zur Vermessung eines typgleichen Werkstücks aufgenommen werden. Die Aufnahme kann abhängig von dem unten genannten Feststellungsergebnis stattfinden.

Zu diesen zusätzlichen Informationen können insbesondere auch solche Informationen gehören, die sich auf die Ermittlung des Prüfmerkmals beziehen, beispielsweise auf die Vorgabe der Auswertemethode (z.B. Auswertung über Gauss-Element oder mit Modifikator, z.B. mit projizierter Toleranzzone), und/oder die sich auf für das Prüfmerkmal indirekt erforderliche Hilfskonstrukte (z.B. Symmetriegerade, Schnittpunkt, ...) beziehen.

Insbesondere wird vorgeschlagen: Ein Verfahren gemäß Anspruch 1 zum Vermessen eines zu vermessenden Werkstücks mittels eines Koordinatenmessgeräts, wobei, unter anderem,
- auf eine Datenbank zugegriffen wird, in der eine Mehrzahl von Datensätzen gespeichert ist, die jeweils Daten aufweisen über:
   a) zumindest zwei Geometrieelemente, die ein Werkstück aufweisen kann,
   b) zumindest eine geometrische Beziehung der zumindest zwei Geometrieelemente in Bezug aufeinander, wobei die geometrische Beziehung eine dimensionale Beziehung ist, die es somit erlaubt, bei einem zu vermessenden Werkstück durch Ermitteln und Auswerten von Koordinaten der zumindest zwei Geometrieelemente festzustellen, ob die geometrische Beziehung besteht,
   c) zumindest ein den zumindest zwei Geometrieelementen zugeordnetes Prüfmerkmal, das in Bezug auf die zumindest zwei Geometrieelemente für ein zu prüfendes Werkstück prüfbar ist,
- für ein zu vermessendes Werkstück durch Auswertung von Messdaten des zu vermessenden Werkstücks und/oder von Planungsdaten des zu vermessenden Werkstücks Werkstückkoordinaten ermittelt werden,
- anhand der Werkstückkoordinaten festgestellt wird, ob das zu vermessende Werkstück die zumindest zwei Geometrieelemente und die zumindest eine geometrische Beziehung von zumindest einem der Mehrzahl von Datensätzen aufweist, und ein entsprechendes Feststellungsergebnis erzeugt wird und
- abhängig von dem Feststellungsergebnis in Bezug auf den jeweiligen Datensatz das zumindest eine zugeordnete Prüfmerkmal oder wenigstens eines zugeordneten Prüfmerkmale in einen Prüfplan zur Vermessung des zu vermessenden Werkstücks oder zur Vermessung eines typgleichen Werkstücks aufgenommen wird oder als Teil des Prüfplans bestätigt wird.

Auf die Art der geometrischen Beziehung wurde oben bereits eingegangen. Sie ist eine dimensionale geometrische Beziehung, die es somit erlaubt, bei einem zu vermessenden Werkstück durch Ermitteln und Auswerten von Koordinaten der zumindest zwei Geometrieelemente festzustellen, ob die geometrische Beziehung besteht. Die Ermittelbarkeit, ob die geometrische Beziehung besteht, ist allerdings keine hinreichende Bedingung dafür, dass es sich um eine dimensionale Bedingung handelt. Zum Beispiel kann eine nicht dimensionale geometrische Beziehung zweier paralleler Linien, die jeweils eine Kante eines Werkstücks repräsentieren, in ihrer Parallelität bestehen. Diese Bedingung erfüllen viele Typen von Werkstücken. Es müssen lediglich zwei parallele Kanten vorhanden sein. Wenn jedoch die geometrische Beziehung zusätzlich definiert, dass der Abstand der parallelen Linien einen definierten Wert (d. h. einen Wert der Dimension Länge bzw. Abstand) haben muss, und/oder zusätzlich definiert, dass die Länge des Abstandes in einem definierten Verhältnis zu einer anderen Dimension zumindest eines der geometrischen Elemente steht, dann handelt sich um eine dimensionale geometrische Beziehung und ermöglicht es, Gruppen von Geometrieelemente gezielter zu ermitteln. Die diesen gezielt ermittelten Gruppen entsprechenden Prüfmerkmale, welche früher bereits bei der Prüfung von Werkstücken sinnvoll waren, können daher in Bezug auf das zu vermessende Werkstück gezielter ermittelt werden als ohne die Berücksichtigung der Dimensionalität der Beziehung.

Der Datensatz bezieht sich wie oben stehend auf ein zu vermessendes Werkstück. Insbesondere wenn wie bei einer Serienproduktion eine Mehrzahl von typgleichen Werkstücken hergestellt wird, kann sich der Datensatz auch auf ein typgleiches Werkstück beziehen. Auch in diesem Fall kann davon gesprochen werden, dass sich der Datensatz außerdem auf das zu vermessende Werkstück bezieht. Ferner können die Werkstückkoordinaten für die Feststellung, ob das zu vermessende Werkstück die zumindest zwei Geometrieelemente und die zumindest eine geometrische Beziehung von zumindest einem der Mehrzahl von Datensätzen aufweist, von einem typgleichen Werkstück gewonnen werden und es kann dennoch korrekterweise davon gesprochen werden, dass die Werkstückkoordinaten auch für das zu vermessende Werkstück gültig sind. Anders ausgedrückt kann das zu vermessende Werkstück ein konkretes Exemplar sein oder ein beliebiges Exemplar eines Typs. Im Rahmen dieser Feststellung ist es in den meisten Fällen unerheblich, ob es geringfügige Abweichungen zwischen den typgleichen Werkstücken und/oder zwischen einem der typgleichen Werkstücke und Planungsdaten gibt. Aus diesem Grund wird es bevorzugt, dass bei der Feststellung, ob das zu vermessende Werkstück die zumindest zwei Geometrieelemente und die zumindest eine geometrische Beziehung von zumindest einem der Mehrzahl von Datensätzen aufweist, eine Toleranz zugelassen wird. Dies bedeutet, dass insbesondere auch dann festgestellt wird, dass das zu vermessende Werkstück die zumindest zwei Geometrieelemente und die zumindest eine geometrische Beziehung des Datensatzes aufweist, wenn die vorgegebene maximale Toleranz nicht überschritten wird. Die Toleranz kann sich auf sämtliche Maß- und Positionsangaben sowie auf Informationen beziehen, anhand derer die Geometrieelemente und die geometrische Beziehung ermittelt werden.

Umgekehrt jedoch muss sich die Toleranz im Einzelfall nicht auf sämtliche dieser Angaben und Informationen beziehen. Vielmehr kann eine Toleranz auch lediglich für eine der Angaben und/oder für eine der Informationen zu der Ermittlung der Geometrieelemente und der geometrischen Beziehung zugelassen sein. Eine Toleranz trägt verschiedenen Umständen Rechnung, wie den Tatsachen, dass Werkstückkoordinaten nicht exakt gemessen können und Werte (Messwerte und auch Planungsdaten) nicht ohne Verarbeitungsfehler (z. B. Rundungsfehler) durch Computer verarbeitet werden können. Auch kann durch eine Toleranz bezüglich der geometrischen Beziehung der Geometrieelemente die Ermittlung von ähnlichen Datensätzen ermöglicht werden. Ein entsprechendes Beispiel wird noch anhand der beigefügten Figuren beschrieben.

Das genannte Feststellungsergebnis kann insbesondere dann als positiv bezeichnet werden, wenn es bedeutet, dass das zu vermessende Werkstück die zumindest zwei Geometrieelemente und die zumindest eine geometrische Beziehung aufweist (insgesamt auch als Entsprechung des zu vermessenden Werkstücks mit dem Datensatz zu bezeichnen) oder gemäß einer vorgegebenen Beurteilungsweise wahrscheinlich aufweist. Im Fall eines positiven Feststellungsergebnisses kann das zumindest eine zugeordnete Prüfmerkmal oder wenigstens eines der zugeordneten Prüfmerkmale in den Prüfplan des zu vermessenden Werkstücks aufgenommen werden oder als Teil des Prüfplans bestätigt werden. Die Vorgehensweise, dass bei der Feststellung eine Beurteilung stattfindet und die Wahrscheinlichkeit für eine Entsprechung des zu vermessenden Werkstücks mit dem Datensatz ermittelt wird, stellt eine Variante zu der oben erwähnten Toleranz für Abweichungen dar. Insbesondere kann die Wahrscheinlichkeit ermittelt werden, indem für eine Anzahl von Messpunkten oder aus den Planungsdaten gewonnenen Punkten des zu vermessenden Werkstücks, insbesondere für eine definierte Anzahl solcher Punkte, mittels statistischer Methoden die Abweichung von den in dem Datensatz definierten zumindest zwei Geometrieelementen unter Berücksichtigung der zumindest einen geometrischen Beziehung ermittelt wird. Zum Beispiel kann hierbei als Maß für die Wahrscheinlichkeit die Quadratwurzel der Summe der Abweichungsquadrate der Punkte gebildet werden. Bevorzugt wird, dass das Maß für die Wahrscheinlichkeit normiert wird. Für das normierte Maß kann eine Grenzwahrscheinlichkeit vorgegeben werden. Liegt die konkret für ein zu vermessendes Werkstück erhaltene Wahrscheinlichkeit über der Grenzwahrscheinlichkeit, ist das Feststellungsergebnis positiv.

Gemäß der Erfindung wird durch jeden der Datensätze zumindest zwei Geometrieelemente definiert, die zueinander in einer dimensional definierten Beziehung stehen. Bei der Ermittlung, ob die in einem konkreten Datensatz definierten Geometrieelemente, bei einem zu vermessenden Werkstück vorhanden sind, können die in dem Datensatz definierten Geometrieelemente einzeln daraufhin untersucht werden, ob sie bei dem zu vermessenden Werkstück vorhanden sind oder nicht. Wird festgestellt, dass lediglich eines der Geometrieelemente bei dem zu vermessenden Werkstück vorhanden ist oder sind im Fall von mehr als zwei in dem Datensatz definierten Geometrieelementen nicht alle diese Geometrieelemente bei dem zu vermessenden Werkstück vorhanden, scheidet eine Nutzung des Datensatzes zur Erzeugung/Überprüfung eines Prüfplans aus. Sind dagegen alle in dem Datensatz definierten Geometrieelemente bei dem zu vermessenden Werkstück vorhanden, kann ermittelt werden, ob auch die in dem Datensatz definierte dimensionale geometrische Beziehung bei den vorhandenen Geometrieelementen besteht oder nicht besteht.

Allgemeiner formuliert kann daher bei einer Ausgestaltung des Verfahrens bei der Feststellung, ob das zu vermessende Werkstück die zumindest zwei Geometrieelemente und die zumindest eine geometrische Beziehung von zumindest einem der Mehrzahl von Datensätzen aufweist, in Bezug auf einen der Datensätze zunächst festgestellt werden, ob das zu vermessende Werkstück alle Geometrieelemente aufweist, für die in dem Datensatz die geometrische Beziehung der Geometrieelemente in Bezug aufeinander definiert ist, und, wenn dies der Fall ist, danach ermittelt wird, ob die geometrische Beziehung bei den Geometrieelementen des zu vermessenden Werkstücks besteht.

Insbesondere kann in Bezug auf dieselben Geometrieelemente des zu vermessenden Werkstücks eine Mehrzahl der in der Datenbank gespeicherten Datensätze ermittelt werden, die jeweils Datensatz-Geometrieelemente definieren, die derselben Mehrzahl von Geometrieelementen des zu vermessenden Werkstücks entsprechen und außerdem jeweils eine geometrische Beziehung dieser Datensatz-Geometrieelemente definieren. Allerdings kommt es häufig vor, dass die Übereinstimmung der Geometrieelemente des Datensatzes einerseits und des zu vermessenden Werkstücks andererseits nicht exakt ist und/oder das die in dem jeweiligen Datensatz definierte geometrische Beziehung bei den Geometrieelementen des zu vermessenden Werkstücks nicht exakt besteht. Es wird daher vorgeschlagen, für jeden der ermittelten Datensätze ein Maß für eine Übereinstimmung der Geometrieelemente und der geometrischen Beziehung zu ermitteln.

Dies ermöglicht es, ermittelte Datensätze als nicht übereinstimmend oder geringer als zumindest ein anderer ermittelter Datensatz übereinstimmend zu kennzeichnen und optional aus der Menge der ermittelten Datensätze auszuschließen. Insbesondere kann der Datensatz mit dem höchsten Maß der Übereinstimmung ausgewählt werden und kann von diesem ausgewählten Datensatz das zumindest eine zugeordnete Prüfmerkmal oder wenigstens eines der zugeordneten Prüfmerkmale in den Prüfplan zur Vermessung des zu vermessenden Werkstücks oder zur Vermessung eines typgleichen Werkstücks aufgenommen werden oder als Teil des Prüfplans bestätigt werden.

Gemäß den beigefügten Patentansprüchen wird eine Mehrzahl der in der Datenbank gespeicherten Datensätze ermittelt, die jeweils Datensatz-Geometrieelemente definieren, die derselben Mehrzahl von Geometrieelementen des zu vermessenden Werkstücks entsprechen, und außerdem jeweils für diese Datensatz-Geometrieelemente die geometrische Beziehung definieren, wobei für jeden der Mehrzahl der ermittelten Datensätze ein Maß für eine Übereinstimmung der Geometrieelemente und der geometrischen Beziehung ermittelt wird und wobei anhand des Maßes der Übereinstimmung mindestens einer der Mehrzahl der ermittelten Datensätze als nicht übereinstimmend oder geringer übereinstimmend als zumindest ein anderer der Mehrzahl der ermittelten Datensätze ermittelt wird. Das Maß kann z. B. ein Maß für die oben erwähnte Wahrscheinlichkeit für eine Entsprechung des zu vermessenden Werkstücks mit dem Datensatz sein.

Das jeweilige zugeordnete Prüfmerkmal ist wie oben stehend in Bezug auf die zumindest zwei Geometrieelemente für ein zu prüfendes Werkstück prüfbar. Bei Ermittlung des Prüfmerkmals ergibt sich zumindest ein Prüfmerkmal-Wert, wenn die Datenbasis hierfür ausreichend ist. Vorzugsweise ist in dem Datensatz zumindest ein Prüfmerkmal enthalten, welches von den zumindest zwei Geometrieelementen und/oder ihrer Beziehung zueinander abhängt. Bei einem solchen Prüfmerkmal handelt sich daher nicht um ein Prüfmerkmal, was bereits durch Auswertung der Koordinaten nur eines der Geometrieelemente ermittelbar ist. Es ist jedoch nicht ausgeschlossen und in vielen Fällen sinnvoll, dass der Datensatz jedenfalls auch zumindest ein Prüfmerkmal aufweist, das bereits durch Auswertung der Koordinaten eines der Geometrieelemente ermittelbar ist. Zum Beispiel kann im Fall von zwei parallelen Kanten als die zwei Geometrieelemente jedem der Geometrieelemente das Prüfmerkmal Geradlinigkeit zugeordnet sein. Außerdem enthält der Datensatz zum Beispiel noch das Prüfmerkmal Parallelität der parallelen Kanten als Prüfmerkmal, dessen Ermittelbarkeit von der Beziehung der Geometrieelemente zueinander abhängt, d. h. davon abhängt, dass die Koordinaten beider Geometrieelemente vorliegen.

Wie oben erwähnt kann das Verfahren nicht nur dazu genutzt werden, bei Entsprechung des zu vermessenden Werkstücks mit dem Datensatz zumindest ein Prüfmerkmal aus dem Datensatz in einen Prüfplan zu übernehmen, sondern auch zur Bestätigung eines in einem Prüfplan vorhandenen Prüfmerkmals genutzt werden oder zur Bestätigung genutzt werden, dass ein für die Aufnahme in den Prüfplan infrage stehendes Prüfmerkmal tatsächlich aufgenommen wird. Zum Beispiel können daher die Prüfmerkmale eines für ein typähnliches Werkstück vorhandenen Prüfplans in dieser Weise geprüft und gegebenenfalls bestätigt werden. Wird ein Prüfmerkmal nicht bestätigt, kann es aus dem Prüfplan entfernt werden.

Die Erfindung betrifft insbesondere die automatische Ermittlung der Werkstückkoordinaten, die automatische Durchführung der Feststellung, ob das zu vermessende Werkstück die zumindest zwei Geometrieelemente und die zumindest eine geometrische Beziehung von zumindest einem der Mehrzahl von Datensätzen aufweist, und die automatische Aufnahme und/oder Bestätigung zumindest eines Prüfmerkmals des zumindest einen der Mehrzahl von Datensätzen in/für den Prüfplan. Wenn im Fall der Ermittlung der Werkstückkoordinaten Messdaten des zu vermessenden Werkstücks ausgewertet werden kann auch die Vermessung des Werkstücks ein Schritt des Verfahrens sein. Die Auswertung der Messdaten in Bezug auf die Ermittlung der Werkstückkoordinaten besteht in jedem Fall zumindest darin, dass die für die durchzuführende Feststellung erforderlichen Werkstückkoordinaten ermittelt werden. Dies kann sich auf eine Auswahl von Messpunkten beschränken und/oder weitergehende Auswertungsschritte beinhalten, wie zum Beispiel die Ermittlung der Koordinaten für eine Auswahl von Messpunkten oder für alle Messpunkte aus den Roh-Messdaten eines Koordinatenmessgeräts.

Allgemeiner formuliert kann daher das zu vermessende Werkstück mittels zumindest eines Koordinatenmessgeräts vermessen werden und können die Messdaten erzeugt werden, um die Werkstückkoordinaten zu ermitteln.

Ferner alternativ oder zusätzlich kann als Teil des Verfahrens das zu vermessende Werkstück oder ein typgleiches Werkstück entsprechend dem Prüfplan mittels zumindest eines Koordinatenmessgeräts vermessen werden und/oder kann ein Wert des in den Prüfplan aufgenommenen oder als Teil des Prüfplans bestätigten Prüfmerkmals ermittelt werden.

Wie erwähnt, wird anhand der genannten Werkstückkoordinaten festgestellt, ob das zu vermessende Werkstück die zumindest zwei Geometrieelemente und die zumindest eine geometrische Beziehung von zumindest einem der Mehrzahl von Datensätzen aufweist. Je nach Art des Geometrieelements und/oder je nach Vorgehensweise kann das Vorhandensein des Geometrieelements (oder auch das Nicht-Vorhandensein) insbesondere anhand seiner geometrischen Lage (zum Beispiel Lage in einem Koordinatensystem des Werkstücks), Ausrichtung (zum Beispiel Ausrichtung in einem Koordinatensystem des Werkstücks), Art (zum Beispiel Ebene, Kante, Bohrung), Form (zum Beispiel geradlinig, gekrümmt, abgewinkelt, kreisförmig, elliptisch), Größe (gekennzeichnet durch zumindest eine Abmessung) und/oder Beziehung zu anderen Geometrieelementen des Werkstücks (zum Beispiel zu einer anderen Kante parallele Kante, Bohrung als Teil einer Anordnung mit mehreren Bohrungen, gegenüber einem anderen ebenen Oberflächenbereich abgewinkelt verlaufender ebener Oberflächenbereich) durch Auswertung der Werkstückkoordinaten festgestellt werden.

Im Fall der Auswertung von Planungsdaten des zu vermessenden Werkstücks Werkstückkoordinaten, um festzustellen, ob das zu vermessende Werkstück das jeweilige Geometrieelement aufweist, können die Werkstückkoordinaten wie bei der Vermessung eines Werkstücks ebenfalls die Koordinaten von Punkten sein, d. h. sie entsprechen Messpunkten bei der Vermessung. Bei Planungsdaten ist es jedoch je nach dem Datenformat der Planungsdaten auch möglich, dass außer zumindest einzelner Koordinaten andere geometrische Information ausgewertet wird. Zum Beispiel sind Planungsdaten in Formaten bekannt, die Vektoren und somit Richtungen und/oder Längen von Geometrieelementen zur Beschreibung der Geometrie des zu vermessenden Werkstücks nutzen. Je nach Art des festzustellenden Geometrieelements können daher zum Beispiel auch solche Längen und/oder Richtungen ausgewertet werden, beispielsweise mit entsprechenden Längen und/oder Richtungen des festzustellenden Geometrieelements verglichen werden, optional unter Berücksichtigung der Lage im Koordinatensystem des Werkstücks oder eines anderen Koordinatensystems. Ferner sind Formate bekannt, die insbesondere Oberflächen von Werkstücken durch Netze beschreiben. Weit verbreitet ist zum Beispiel das unregelmäßige Dreiecksnetz, (englisch, Triangulated Irregular Network, TIN). Informationen über das TIN können als die Dreiecksflächen und/oder als die Knoten an den Ecken der Dreiecksflächen gespeichert werden.

Die Erstellung der Datenbank kann einmalig erfolgen. Alternativ kann die Datenbank wiederholt durch zusätzliche Datensätze ergänzt werden, die zum Beispiel aus existierenden Prüfplänen gebildet werden. Dies vergrößert die Wahrscheinlichkeit, dass bei Erstellung eines Prüfplans für ein Werkstück zumindest ein passender Datensatz vorhanden ist.

Die Datensätze in der Datenbank können in demselben Datenformat wie die auf den Werkstückkoordinaten beruhenden Informationen über das zu vermessende Werkstück gespeichert sein, oder in einem anderen Format gespeichert sein. Es kann daher erforderlich sein, bei dem Schritt der Feststellung, ob das zu vermessende Werkstück ein durch den jeweiligen Datensatz definiertes Geometrieelement aufweist, das eine Datenformat zumindest teilweise in das andere Datenformat umzuwandeln oder beide Datenformate so umzuwandeln, dass vergleichbare Daten erhalten werden. Grundsätzlich müssen allerdings nicht exakt gleiche Datenformate erreicht werden bzw. müssen die in den verschiedenen Datenformaten vorliegenden Daten nicht vollständig in ein gemeinsames Datenformat umgewandelt werden. Vielmehr ist es abhängig von der Art des Geometrieelements und der Vorgehensweise bei der Feststellung, ob und inwieweit zumindest eines der Datenformate geändert werden muss. Zum Beispiel kann eine gerade Linie mit bekannter Länge und bekannter Position im Werkstückkoordinatensystem, die einer Kante des Werkstücks entspricht, auf einfache Weise mit einer Vielzahl von Punkten verglichen werden, die durch die auszuwertenden Werkstückkoordinaten definiert sind. Zum Beispiel kann durch eine Mehrzahl der Punkte mittels Ausgleichsrechnung eine gerade Linie gelegt werden und kann dann geprüft werden, ob die gerade Linie hinsichtlich Länge und Position mit der in dem Datensatz definierten Linie übereinstimmt oder inwieweit sie übereinstimmt. Es kann in dem Datensatz oder in anderer Weise definiert sein, wie weit die beiden Linien voneinander abweichen dürfen, damit die Feststellung noch als positiv gilt, d. h das Geometrieelement in dem vermessenen Werkstück vorhanden ist. In Bezug auf die gerade Linie kann zum Beispiel eine maximale Abweichung der Richtung der Linien und auch eine maximale Abweichung der Länge der Linien definiert sein. Um Missverständnisse zu vermeiden ist an dieser Stelle anzumerken, dass die Werkstückkoordinaten nicht zwingend im Werkstückkoordinatensystem angegeben werden müssen, auch wenn dies möglich ist.

Erfindungsgemäß ist eine Mehrzahl der Datensätze in der Datenbank gespeichert und es wird aus den Werkstückkoordinaten ermittelt, mit welchen Geometrieelementen aus verschiedenen Datensätzen Geometrieelemente des zu vermessenden Werkstücks übereinstimmen. Zum Beispiel kann dies jeweils für einen Typ von Geometrieelementen ermittelt werden, etwa jeweils für eine Kante bzw. Linie, für einen Oberflächenbereich bzw. ebene Fläche oder eine kreisförmige Bohrung bzw. Kreislinie usw. Dabei kann für jedes Geometrieelement des zu vermessenden Werkstücks, das grundsätzlich für eine Prüfung des Werkstücks relevant sein kann, in den gespeicherten Datensätzen nach übereinstimmenden Geometrieelementen gesucht werden, oder es kann umgekehrt für Geometrieelemente der Datensätze ermittelt werden, ob das zu vermessende Werkstück dieses Geometrieelement aufweist.

Bei dem Verfahren kann es sich insbesondere um ein zumindest teilweise computerimplementiertes Verfahren handeln. Computerimplementiert sind insbesondere die oben erwähnten automatischen Schritte der Ermittlung der Werkstückkoordinaten, der Durchführung der Feststellung und der Aufnahme und/oder Bestätigung zumindest eines Prüfmerkmals des zumindest einen der Mehrzahl von Datensätzen in/für den Prüfplan. Ferner können die in dieser Beschreibung genannten Schritte der Vermessung des zu vermessenden Werkstücks oder eines typgleichen Werkstücks computerimplementiert gesteuert werden. Die jeweilige Vermessung wird aber in jedem Fall unter Verwendung von zumindest einem oder durch zumindest ein Koordinatenmessgerät ausgeführt. Dies schließt automatisch betriebene Koordinatenmessgeräte, aber auch Koordinatenmessgeräte mit handgeführten Sensoren mit ein.

Zum Umfang der Erfindung gehört daher auch ein Computerprogramm, umfassend Befehle, die bei der Ausführung des Programms durch einen Computer oder durch eine Anordnung von Computern diesen/diese veranlassen, das Verfahren in einer in dieser Beschreibung beschriebenen Weisen oder Ausgestaltungen auszuführen. Ferner gehört zur Erfindung ein computerlesbares Medium, umfassend Befehle, die bei der Ausführung durch einen Computer oder durch eine Anordnung von Computern diesen/diese veranlassen, das Verfahren in einer in dieser Beschreibung beschriebenen Weisen oder Ausgestaltungen auszuführen.

Daher kann insbesondere die weiter unten beschriebene Vorrichtung zur Durchführung des Verfahrens ein Computerprogramm aufweisen, welches die zugeordneten Verfahrensschritte durchführt, wenn das Computerprogramm auf einem Computer oder einer Anordnung von Computern ausgeführt wird.

Diejenigen Teile der Vorrichtung, die wie oben erwähnt computerimplementiert Verfahrensschritte ausführen, können zum Beispiel aus einem einzigen Computer oder einem Computernetz bestehen oder den Computer bzw. das Computernetz aufweisen. Der Computer oder zumindest einer der Computer kann bezüglich seiner Arbeitsweise insbesondere ein Analogrechner, Digitalrechner und/oder ein Hybridrechner sein. Bezüglich seiner Größe und Bauart kann er ein Smartphone, ein Personal Digital Assistant (PDA), ein Tabletcomputer, ein eingebettetes System (z. B. in dem Steuerrechner eines Koordinatenmessgeräts eingebettet), ein Ein- oder Mehrplatinencomputer, ein Personal Computer (PC), ein Desktop-Computer, ein Arbeitsplatzrechner, ein in ein Computernetz eingebundener Hostrechner oder Server, ein Thin Client - Computer, ein Netbook, ein Notebook, ein Laptop, ein Mainframe-Computer oder ein Supercomputer sein, wobei manche der genannten Arten auch durch einen einzigen Computer realisiert werden können wie zum Beispiel ein PC mit mehreren Platinen. Ferner kann der Computer oder zumindest einer der Computer ein oder mehrere zentrale Verarbeitungseinheiten (CPU) und/oder pro CPU ein oder mehrere Rechenkerne aufweisen. Auch Grafikkarten oder auch andere dedizierte Karten mit Verarbeitungseinheiten, die Teil eines Computers sind, können ausschließlich oder in Kombination mit anderen Computern oder Verarbeitungseinheiten die Mittel zur Durchführung des Verfahrens darstellen.

Außerdem gehört zum Umfang der Erfindung ein Computerprogramm, aufweisend Befehle, die bei der Ausführung des Programms durch einen Computer oder eine Anordnung von Computern diesen/diese veranlassen, die computerimplementierten Teile des Verfahrens auszuführen, insbesondere in einer der beschriebenen Ausgestaltungen auszuführen.

Ferner ist darauf hinzuweisen, dass der Computer oder die Computer zwar vorzugsweise durch ein Computerprogramm zur Ausführung des Verfahrens veranlasst wird/werden, jedoch die Mittel zur Ausführung des Verfahrens zumindest auch eine durch Hardware realisierte, vorzugsweise programmierbare Anordnung (zum Beispiel eine Anordnung von Logik-Gattern) aufweisen können, wie beispielsweise ein ASIC (Application-Specific Integrated Circuit), ein PLD (Programmable Logic Device) oder ein FPGA (Field Programmable Gate Array).

Ferner gehört zum Umfang der Erfindung eine Anordnung mit der Vorrichtung, wobei die Anordnung ferner zumindest ein Koordinatenmessgerät aufweist, das ausgestaltet ist, die Vermessung des oder der Werkstücke auszuführen und entsprechende Messdaten zu erzeugen. Zum Beispiel kann es sich bei den Messdaten um Roh-Messdaten handeln oder bereits um Daten über Koordinaten von Messpunkten. Auch ist es möglich, dass das Koordinatenmessgerät die für die oben beschriebene Feststellung erforderlichen Werkstückkoordinaten erzeugt und ausgibt. Ferner können die erzeugten Messdaten durch Vermessung des zu vermessenden Werkstücks oder eines typgleichen Werkstücks entsprechend dem Prüfplan erzeugt werden, um einen Wert des in den Prüfplan aufgenommenen oder als Teil des Prüfplans bestätigten Prüfmerkmals aus den erzeugten Messdaten zu ermitteln.

Alternativ oder zusätzlich kann die Datenbank mit der Mehrzahl der Datensätze Teil der Anordnung sein.

Wie oben erwähnt betrifft die Erfindung eine Vorrichtung gemäß Anspruch 9 zur Durchführung des Verfahrens in einer der in dieser Beschreibung beschriebenen Weisen und Ausgestaltungen, wobei die Vorrichtung unter anderem aufweist:
- eine Zugriffseinrichtung, die ausgestaltet ist auf eine Datenbank zuzugreifen, in der eine Mehrzahl von Datensätzen gespeichert ist, die jeweils Daten aufweisen über:
   a) zumindest zwei Geometrieelemente, die ein Werkstück aufweisen kann,
   b) zumindest eine geometrische Beziehung der zumindest zwei Geometrieelemente in Bezug aufeinander, wobei die geometrische Beziehung eine dimensionale Beziehung ist, die es somit erlaubt, bei einem zu vermessenden Werkstück durch Ermitteln und Auswerten von Koordinaten der zumindest zwei Geometrieelemente festzustellen, ob die geometrische Beziehung besteht,
   c) zumindest ein den zumindest zwei Geometrieelementen zugeordnetes Prüfmerkmal, das in Bezug auf die zumindest zwei Geometrieelemente für ein zu prüfendes Werkstück prüfbar ist,
- eine Auswertungseinrichtung, die ausgestaltet ist, für ein zu vermessendes Werkstück durch Auswertung von Messdaten des zu vermessenden Werkstücks und/oder von Planungsdaten des zu vermessenden Werkstücks Werkstückkoordinaten zu ermitteln,
- eine Feststellungeinrichtung, die ausgestaltet ist, anhand der Werkstückkoordinaten festzustellen, ob das zu vermessende Werkstück die zumindest zwei Geometrieelemente und die zumindest eine geometrische Beziehung von zumindest einem der Mehrzahl von Datensätzen aufweist, und ein entsprechendes Feststellungsergebnis zu erzeugen und
- eine Prüfplaneinrichtung, die ausgestaltet ist, abhängig von dem Feststellungsergebnis in Bezug auf den jeweiligen Datensatz das zumindest eine zugeordnete Prüfmerkmal oder wenigstens eines der zugeordneten Prüfmerkmale in einen Prüfplan zur Vermessung des zu vermessenden Werkstücks oder zur Vermessung eines typgleichen Werkstücks aufzunehmen oder als Teil des Prüfplans zu bestätigen.

Ausgestaltungen und Weiterbildungen der Vorrichtung und einer Anordnung mit der Vorrichtung ergeben sich aus Ausgestaltungen und Weiterbildungen des Verfahrens und umgekehrt. Zum Beispiel kann die Vorrichtung wie erwähnt Teil einer Anordnung sein, die zumindest ein Koordinatenmessgerät aufweist und kann das Koordinatenmessgerät oder zumindest eines der Koordinatenmessgeräte ausgestaltet sein bzw. dazu verwendet werden, das zu vermessende Werkstück zu vermessen und die Messdaten zu erzeugen, damit die Auswertungseinrichtung, die Messdaten auswertet die Werkstückkoordinaten ermittelt.

Wie bereits erwähnt sind in Bezug auf die Vermessung und Herstellung von Werkstücken Toleranzen zu berücksichtigen. Bei der Festlegung der jeweiligen Toleranz ist ein Kompromiss zwischen dem Streben nach einem möglichst ohne Toleranzen gefertigten Werkstück einerseits und der Realisierbarkeit und dem Aufwand andererseits zu finden. Deshalb legen in vielen Fällen die Planungsdaten für die Fertigung von Werkstücken zulässige Toleranzen fest. In den vorhandenen Datensätzen, die in der Datenbank gespeichert sind, kann daher bereits eine zulässige Toleranz in Bezug auf das zugeordnete Prüfmerkmal festgelegt sein. Es ist jedoch auch möglich, die zulässige Toleranz erst später festzulegen oder aus den Planungsdaten für die Fertigung des Werkstücks zu ermitteln.

Ausführungsbeispiel der Erfindung werden nun unter Bezugnahme auf die beigefügte Zeichnung beschrieben. Die einzelnen Figuren der Zeichnung zeigen:
- Fig. 1: ein Koordinatenmessgerät, das lediglich im vorliegenden Ausführungsbeispiel ein klassisches Koordinatenmessgerät in Portalbauweise ist,
- Fig. 2: schematisch einen Rechner, der verschiedene Einrichtungen zur Durchführung des erfindungsgemäßen Verfahrens aufweist,
- Fig. 3: einen Schraubenschlüssel mit einem Maul und einem Ring jeweils zum Kontaktieren des Kopfes einer Sechskantschraube oder einer entsprechenden Schraubenmutter,
- Fig. 4: Geometrieelemente, die den in Fig. 3 dargestellten Schraubenschlüssel charakterisieren,
- Fig. 5: einen Schraubenschlüssel mit je einem Maul an den entgegengesetzten Enden des Griffbereichs, wobei für diesen Schraubenschlüssel ermittelt wird, welchen der Geometrieelemente aus Fig. 4 er entspricht und welchen der für diese Geometrieelemente definierten geometrischen Beziehungen er entspricht,
- Fig. 6: ein Flussdiagramm, welches schematisch ein Verfahren zum Identifizieren eines vorhandenen Datensatzes anhand von Geometrieelementen und einer geometrischen Beziehung der Geometrieelemente zeigt,
- Fig. 7: eine Anordnung von Geometrieelementen, die in einem vorhandenen Datensatz definiert sind, und
- Fig. 8: eine Anordnung von Geometrieelementen eines zu vermessenden Werkstücks.

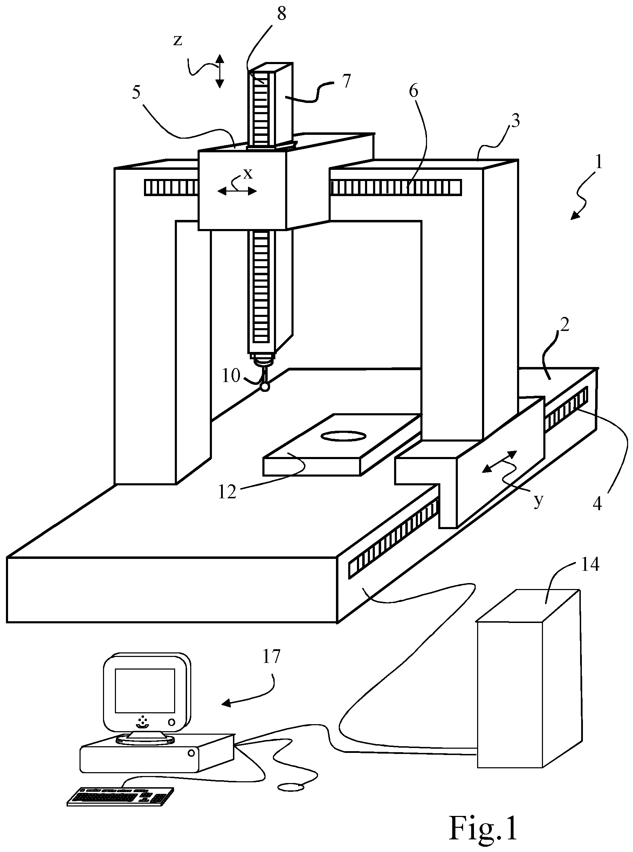

Fig.1 zeigt schematisch ein Koordinatenmessgerät 1 in Portalbauweise. Entlang von zwei parallelen Führungen im Bereich eines Messtisches 2 (z. B. eine Granitplatte) ist ein erster Schlitten 3 in Form eines Portals beweglich geführt. Zur Messung der Position des Portals entsprechend einer ersten linearen Bewegungsachse y ist ein erster Maßstab 4 vorgesehen. Die Position wird mit einem entsprechenden Ablesesensor (nicht dargestellt) abgelesen, wie auch bei weiteren Maßstäben, die im Folgenden beschrieben werden. Außerdem ist ein erster Antrieb (nicht dargestellt) vorgesehen, durch den eine Bewegung des ersten Schlittens 3 in y-Richtung angetrieben werden kann.

Entlang der den Messtisch 2 horizontal überspannenden Traverse des portalförmigen ersten Schlittens 3, ist ein zweiter Schlitten 5 beweglich geführt, wobei zur Messung von dessen Position relativ zu dem Portal entsprechend einer zweiten linearen Bewegungsachse x ein zweiter Maßstab 6 und ein entsprechender zweiter Ablesesensor (nicht dargestellt) vorgesehen sind. Eine Bewegung des zweiten Schlittens 5 in der x-Richtung kann durch einen zweiten Antrieb (nicht dargestellt) angetrieben werden.

An dem zweiten Schlitten 5 ist wiederum ein dritter Schlitten, nämlich eine Pinole 7, beweglich geführt, wobei zur Messung der Position der Pinole relativ zu dem zweiten Schlitten 5 entsprechend einer dritten linearen Bewegungsachse z ein dritter Maßstab 8 und ein entsprechender dritter Ablesesensor (nicht dargestellt) vorgesehen sind. Eine Bewegung der Pinole 7 in der z-Richtung kann durch einen dritten Antrieb angetrieben werden. Unterhalb des unteren Endes der Pinole 7 ist ein Messsensor 10 angeordnet, der im vorliegenden Fall in Form eines Taststiftes mit Tastkugel (d.h. als taktiler Sensor) ausgebildet ist, welcher z. B. über einen Messkopf und eine Wechselschnittstelle am unteren Ende der Pinole 7 befestigt ist.

Auf dem Messtisch 2 ist ein Werkstück 12 angeordnet, das durch Bewegung der drei Schlitten 3, 5, 7 vom Messsensor 10 abgetastet werden kann, wobei aus den Signalen des Messsensors 10 und/oder des Messkopfes sowie aus den Maßstabspositionen der Maßstäbe 4, 6, 8 Messwerte auf der Oberfläche des zu vermessenden Werkstückes 12 ermittelt werden. Eine Steuerung, implementiert durch ein auf einem Steuerrechner 14 ausgeführtes Computerprogramm steuert und/oder regelt die Antriebe der Schlitten 3, 5, 7. Mit der Steuerung kann ein Messrechner 17 verbunden sein, von dem die ausgelesenen Maßstabswerte der Maßstäbe 4, 6, 8, sowie die Signale des Messsensors 10 und/oder des Messkopfes empfangen und verarbeitet werden, um die Koordinaten der von dem Messsensor 10 vermessenden Messpunkte auf der Oberfläche des Werkstücks 12 zu erzeugen.

Insbesondere der in Fig. 1 dargestellte Messrechner 17, oder ein anderer Messrechner oder eine Anordnung von Messrechnern, kann die Zugriffseinrichtung für den Zugriff auf die Datenbank, die Auswertungseinrichtung zur Ermittlung der Werkstückkoordinaten, die Feststellungeinrichtung zur Feststellung, ob das zu vermessende Werkstück zumindest einem der Mehrzahl von Datensätzen entspricht, und die Prüfplaneinrichtung zur Aufnahme des zumindest einen Prüfmerkmals aus dem Datensatz in den Prüfplan oder zur Bestätigung des zumindest einen Prüfmerkmals als Teil des Prüfplans aufweisen. Alternativ kann der Messrechner oder die Anordnung von Messrechnern zumindest einen Teil dieser Einrichtungen aufweisen, insbesondere die Auswertungseinrichtung zur Ermittlung der Werkstückkoordinaten. Dagegen können insbesondere die Zugriffseinrichtung, die Feststelleinrichtung und die Prüfplaneinrichtung gemeinsam auf zumindest einem anderen Rechner oder auf zumindest einer anderen Anordnung von Rechnern realisiert sein.

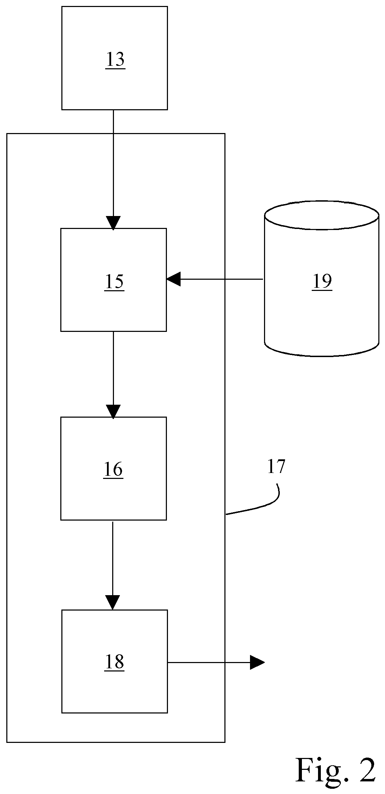

Fig. 2 zeigt schematisch einen Rechner, in dem Ausführungsbeispiel den in Fig. 1 dargestellten Rechner 17. Der Rechner weist die mit dem Bezugszeichen 15 bezeichnete Zugriffseinrichtung, die mit dem Bezugszeichen 16 bezeichnete Feststelleinrichtung und die mit dem Bezugszeichen 18 bezeichnete Prüfplaneinrichtung auf. Als außerhalb des Rechners realisierte Einrichtung ist oben in Fig. 2 die Auswertungseinrichtung 13 dargestellt. Wie durch einen von oben nach unten auf die Zugriffseinrichtung 15 weisenden Pfeil angedeutet ist, empfängt die Zugriffseinrichtung 15 bei ihrem Betrieb die Werkstückkoordinaten von der Auswertungseinrichtung 13. Ferner empfängt die Zugriffseinrichtung 15 aus der Datenbank 19 die Daten der Datensätze bzw. greift auf diese Datensätze zu. Alternativ kann die Feststellungseinrichtung 16 die Werkstückkoordinaten unmittelbar von der Auswertungseinrichtung 13 empfangen und von der in jedem Fall mit der Feststellungeinrichtung 16 verbundenen Zugriffseinrichtung 15 auch die Daten der Datensätze empfangen. Das Feststellungsergebnis oder die Feststellungsergebnisse werden von der Feststellungseinrichtung 16 an die mit ihr verbundene Prüfplaneinrichtung 18 übermittelt. Diese nimmt das zumindest eine zugeordnete Prüfmerkmal oder wenigstens eines der zugeordneten Prüfmerkmale abhängig von dem Feststellungsergebnis in Bezug auf den jeweiligen Datensatz in einen Prüfplan zur Vermessung des zu vermessenden Werkstücks oder zur Vermessung eines typgleichen Werkstücks auf oder bestätigt es als Teil des Prüfplans. Der ausgehend von der Prüfplaneinrichtung 18 unten in Fig. 2 nach rechts weisende Pfeil deutet an, dass eine entsprechende Information bzw. entsprechende Daten von der Prüfplaneinrichtung 18 ausgegeben werden können. Zum Beispiel kann es sich dabei um den Prüfplan handeln. Wurden mehrere der Datensätze aus der Datenbank 19 als dem zu vermessenden Werkstück entsprechend festgestellt, werden auch mehrere Prüfmerkmale in den Prüfplan aufgenommen und/oder als Teil des Prüfplans bestätigt.

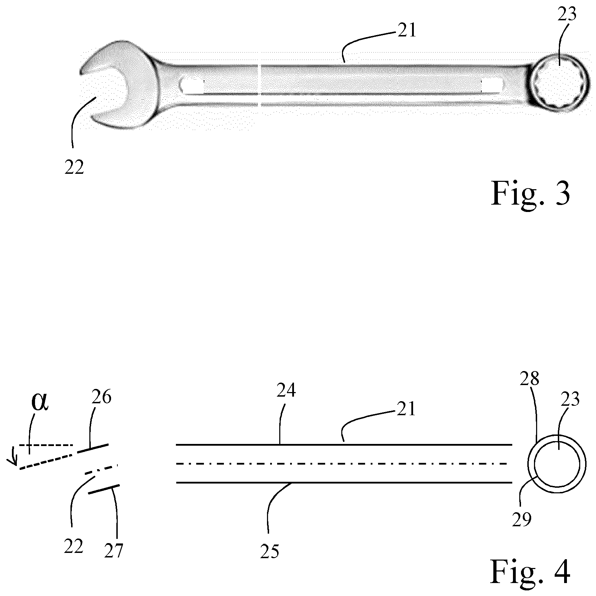

Im Folgenden werden Ausführungsbeispiele für Datensätze und entsprechende Werkstücke beschrieben. Fig. 3 zeigt einen Schraubenschlüssel 21, der an seinem linken Ende ein Maul 22 und an seinem rechten Ende einen Ring 23 aufweist. Sowohl das Maul 22 als auch der Ring 23 sind dazu geeignet, den Kopf einer Sechskantschraube der den Innen-Abmessungen des Mauls 22 bzw. des Rings 23 entsprechenden Größe zu kontaktieren, sodass die Schraube in die gewünschte Drehrichtung drehbar ist. Die langen Kanten des Griffbereichs des Schraubenschlüssels 21 verlaufen wie üblich parallel zueinander.

Fig. 4 zeigt Geometrieelemente, die den langen Kanten des Griffbereichs, dem Maul 22 und dem Ring 23 entsprechen. Dabei entsprechende gleich lange und zu einander parallele gerade Linien 24, 25 den langen Kanten des Griffbereichs, zwei kurze und gleich lange sowie zu einander parallele gerade Linien 26, 27 den Innenkanten des Mauls 22 und zwei konzentrische Kreislinien 28, 29 dem Ring 23. Zu den geraden Linien 24, 25 ist die strichpunktierte Symmetrielinie dargestellt. Auch zu den kurzen geraden Linien 26, 27 der Innenkanten des Mauls 22 ist die strichpunktierte Symmetrielinie dargestellt. Der innere Kreis 28 der zueinander konzentrischen Kreislinien 28, 29 stellt eine Ausgleichs-Kreislinie für die Innenoberfläche des Rings 23 dar. Zum Beispiel berührt der innere Kreis 28 jedes der Segmente, die die Innenoberfläche des Rings 23 bilden, an demjenigen Punkt des Segments, der dem gemeinsamen Mittelpunkt der Kreislinien 28, 29 am nächsten liegt. Der äußere Kreis 29 der zueinander konzentrischen Kreislinien 28, 29 entspricht dem Außenrand des Rings 23.

Aus diesen Geometrieelementen (den langen geraden Linien 24, 25, den kurzen geraden Linien 26, 27 und den konzentrischen Kreislinien 28, 29 lassen sich insbesondere die folgenden Datensätze bilden, wobei eine Mehrzahl der im Folgenden beschriebenen Datensätze optional auch ein Datensatz zusammengefasst werden kann:
Der erste Datensatz betrifft das Maul 22 und enthält die Daten der Geometrieelemente, die jeweils eine der kurzen geraden Linien 26, 27 definieren. Außerdem definiert der Datensatz, dass die zwei geraden Linien parallel zueinander verlaufen. Dies lässt jedoch noch offen, in welchem Abstand zueinander die kurzen geraden Linien 26, 27 verlaufen und insbesondere welches Verhältnis ihre Länge zu ihrem Abstand hat. Die Definition der Länge des Abstandes oder des genannten Verhältnisses ist erforderlich, um das Maul 22 geometrisch zu charakterisieren. Daher sind in dem hier konkret beschriebenen Ausführungsbeispiel folgende geometrische Beziehungen als Teil des ersten Datensatzes definiert: Die Länge der kurzen geraden Linien 26, 27 beträgt x, wobei x ein Wert einer definierten Abmessung ist. Dieser Wert der definierten Abmessung kann entweder in dem Datensatz angegeben sein oder offen gelassen werden, wenn z. B. nach Multiplikation mit einem Skalierungsfaktor zueinander kongruente Mäuler verschiedener Größen von Schraubenschlüsseln durch den Datensatz definiert werden sollen. Außerdem ist als geometrische Beziehung definiert, dass der Abstand gleich der Länge der kurzen geraden Linien 26, 27 multipliziert mit einem Faktor ist, der in dem Ausführungsbeispiel 1,3 beträgt, sodass der Abstand A gleich der Länge x multipliziert mit 1,3 ist, oder A = 1,3 * x. Bei dieser geometrischen Beziehung handelt es sich um eine dimensionale geometrische Beziehung der zwei Geometrieelemente (der kurzen, zueinander parallelen geraden Linien 26, 27) zueinander.

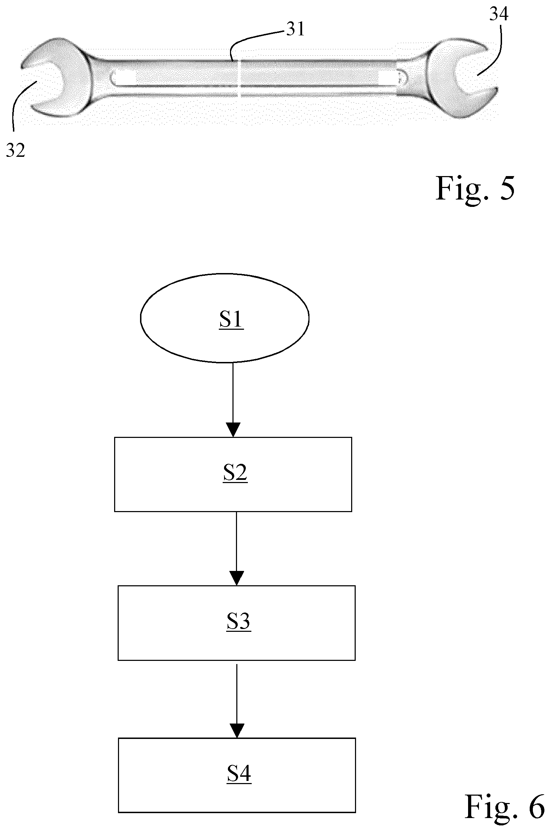

Der zweite Datensatz betrifft die Ausrichtung des Mauls 22, welches gegenüber der Längsrichtung des Schraubenschlüssels (zum Beispiel definiert durch die Richtung des Verlaufs der langen geraden Linien 24, 25) abgewinkelt ist. In Fig. 5 ist diese abgewinkelte Ausgestaltung des Maus 22 durch eine Neigung gegenüber der Horizontalen der Fig. 5 mit einem Neigungswinkel α von 15 Grad erkennbar. Dargestellt in Fig. 5 sind als gestrichelte Linien links in der Figur Verlängerungen der oberen langen geraden Linie 24 und der oberen kurzen geraden Linie 26. Diese Verlängerungen schließen den Neigungswinkel α ein. Der zweite Datensatz enthält daher als Daten der Geometrieelemente die Daten zumindest einer der langen geraden Linien 24, 25 und einer der kurzen geraden Linien 26, 27. Ferner enthält der zweite Datensatz die geometrische Beziehung zumindest dieser Linien 24 oder 25 einerseits und 26 oder 27 andererseits zueinander, dass sie einen Winkel von 15 Grad zueinander einschließen. In diesem Fall ist die Dimension der dimensionalen Beziehung der Winkel, für den der Wert 15 Grad definiert ist.

Der dritte Datensatz betrifft den Ring 23. Als Geometrieelemente definiert der dritte Datensatz die Kreislinien 28, 29. Als geometrische Beziehung(en) definiert der dritte Datensatz, dass die Kreislinien 28, 29 konzentrisch zueinander sind und dass außerdem der Durchmesser (oder alternativ der Radius) der äußeren Kreislinie 28 das 1,4-fache des Durchmessers (bzw. des Radius) der inneren Kreislinie 29 beträgt. Die Dimension ist somit die des Durchmessers und somit einer Länge, wobei bei dem dritten Datensatz lediglich das Verhältnis der Längen definiert ist. Alternativ könnten Werte sowohl für die äußere Kreislinie 28 als auch für die innere Kreislinie 29 definiert sein.

In dem Ausführungsbeispiel ist zum Beispiel dem ersten Datensatz das Prüfmerkmal "Parallelität der kurzen geraden Linien 26, 27" und "Geradheit der kurzen geraden Linien 26, 27" zugeordnet, dem zweiten Datensatz ebenfalls diese Prüfmerkmal der Parallelität und Geradheit zugeordnet, und zwar sowohl in Bezug auf die langen geraden Linien 24, 25 als auch in Bezug auf die kurzen geraden Linien 26, 27 und außerdem das Prüfmerkmal der "Neigung" bzw. Abwicklung des Mauls gegenüber dem Griffbereich zugeordnet und ist dem dritten Datensatz das Merkmal der Konzentrizität der Kreislinien 28, 29 sowie das sogenannte Zweipunktmaß jeweils in Bezug auf die einzelnen Kreislinien 28, 29 zugeordnet. Das Zweipunktmaß beträgt die Abweichung zweier Punkte, die in Richtung einer durch den Kreismittelpunkt verlaufenden Linie einander gegenüberliegen, auf der jeweiligen Kreislinie 28, 29 von dem Durchmesser.

Insbesondere die drei oben genannten Datensätze können in einer Datenbank gespeichert sein/werden, wobei in der Praxis eine Vielzahl weiterer Datensätze in der Datenbank gespeichert ist. Wenn nun ein Werkstück wie in Fig. 5 dargestellt vermessen werden soll, nämlich wiederum ein Schraubenschlüssel 31, kann anhand von Planungsdaten des zu vermessenden Schraubenschlüssels 31 oder anhand des Ergebnisses der Vermessung des Schraubenschlüssels 31 ermittelt werden, welchen Datensätzen der zu vermessende Schraubenschlüssel 31 entspricht.

Der in Fig. 5 dargestellte Schraubenschlüssel 31 hat im Gegensatz zu dem in Fig. 3 dargestellten Schraubenschlüssel 21 an jedem Ende ein Maul 32, 34. Somit fehlt dem Schraubenschlüssel 31 der Ring 23 am rechten Ende des Schraubenschlüssels 21 aus Fig. 3. Bei der Prüfung, welchen der in der Datenbank gespeicherten Datensätze der Schraubenschlüssel aus Fig. 5 entspricht, wird daher in Bezug auf den dritten Datensatz kein positives Feststellungsergebnis erhalten und der dritte Datensatz scheidet als Quelle für die ihm zugeordneten Prüfmerkmale aus. Dagegen kann in Bezug auf die Mäuler 32, 34 jeweils sowohl der erste Datensatz als auch der zweite Datensatz als entsprechend identifiziert werden. Konkreter wird in dem hier beschriebenen Ausführungsbeispiel daher ermittelt, dass bei jedem der Mäuler 32, 34 die kurzen geraden Linien 26, 27 aus Fig. 4 als Geometrieelemente vorhanden sind und dass der Abstand der kurzen geraden Linien 26, 27 gleich ihrer Länge multipliziert mit dem 1,3 ist. Daher entspricht jedes der zwei Mäuler 30, 34 dem ersten Datensatz. Ferner sind in Bezug auf jedes der Mäuler 32, 34 sowohl die langen geraden Linien 24, 25 als auch die kurzen geraden Linien 26, 27 als Geometrieelemente vorhanden und schließt für jedes der Mäuler 32, 34 eine der kurzen geraden Linien 26, 27 mit einer der langen geraden Linien 24, 25 einen Winkel von 15 Grad ein. Daher entspricht jedes der zwei Mäuler 30, 34 in Bezug auf das Griffbereich auch dem zweiten Datensatz.

Somit können in dem Ausführungsbeispiel die oben genannten Prüfmerkmale "Parallelität der kurzen geraden Linien 26, 27" und "Geradheit der kurzen geraden Linien 26, 27" (und zwar in Bezug auf jedes der zwei Mäuler 32, 34) des ersten Datensatzes sowie die Prüfmerkmale "Parallelität der langen geraden Linien 24, 25", "Geradheit der langen geraden Linien 24, 25" und "Neigung des Mauls gegenüber dem Griffbereich" des zweiten Datensatzes ausgewählt werden, insbesondere um sie in einen Prüfplan des zu vermessenden Schraubenschlüssels 31 aufzunehmen oder als Prüfmerkmale des Prüfplans zu bestätigen.

Die zuvor beschriebene Ausführungsbeispiele können zum Beispiel wie folgt erweitert werden: Zum Beispiel kann ein in Bezug auf Schraubenschlüssel definierter Datensatz ausgehend von dem ersten Datensatz noch zusätzliche Geometrien (oder zumindest eine dieser Geometrien kann in einem weiteren Datensatz definiert sein) definieren, z.B. einen an die zwei Geraden angrenzenden Kreisbogen, der dem Verlauf des geschlossenen Endes des Maus entspricht. Als geometrische Beziehung des Datensatzes kann definiert sein, dass die Schnittpunkte der Geraden mit dem Kreisbogen eine vorgegebene Position in Richtung der Maulöffnung einnehmen.

Abschließend soll auf Vorteile und andere Aspekte der Erfindung hingewiesen werden. Bisher wurde bei der Aufstellung eines Prüfplans für ein zu vermessendes Werkstück teilweise manuell vorgegangen. Der Konstrukteur/Messtechniker konnte dabei auf seine Erfahrungen zurückgreifen. Die Spezifikation von Prüfmerkmalen hing dabei wesentlich von seinen Kenntnissen ab. Es kann dabei nicht erwartet werden, dass eine einzelne Person über das gesamte Wissen über bisherige Prüfungen von Werkstücken verfügt. Bei der vorliegenden Erfindung kann dieses Expertenwissen systematisch erfasst, zentral abgelegt und automatisiert für die Identifizierung von Prüfmerkmalen genutzt werden.

Fig. 6 stellt schematisch ein Verfahren zum Identifizieren eines vorhandenen Datensatzes anhand von Geometrieelementen und einer geometrischen Beziehung der Geometrieelemente dar. Das Verfahren kann automatisch ausgeführt werden, zum Beispiel durch ein Computerprogramm, das auf einem Computer oder einer Anordnung von Computern ausgeführt wird. Nach dem Start des Verfahrens in Schritt S1 wird in Schritt S2 einer von mehreren gespeicherten Datensätzen ausgewählt. Optional kann die Auswahl auf Basis von Zusatzinformation getroffen werden. Alternativ können die weiteren Verfahrensschritte für jeden der gespeicherten Datensätze ausgeführt werden. D.h., Schritt S2 kann wiederholt ausgeführt werden, jeweils gefolgt von den Schritten S3 und S4.

In dem folgenden Schritt S3 werden die in dem Datensatz definierten Geometrieelemente in den und/oder in über das Werkstück vorliegenden Informationen gesucht. Als Suchraum steht dabei eine Menge von Geometrieelementen zur Verfügung, die Teil der genannten vorliegenden Informationen über das Werkstück sind oder aus diesen Informationen ermittelt werden. Zum Beispiel stehen die Geometrieelemente "Zylinder" und "ebene Oberfläche" zur Verfügung, wenn ein Werkstück zumindest eine zylindrische Bohrung in einem quaderförmigen Block aufweist. Das Geometrieelement "Zylinder" entspricht dabei der zylindrischen Bohrung, Das Geometrieelement "ebene Oberfläche" entspricht jeweils den Außenoberflächen des quaderförmigen Blocks. Es ist in diesem Beispiel daher mehrfach vorhanden.

In dem folgenden Schritt S4 wird der Suchraum eingeschränkt, d. h. es werden Elemente der genannten Menge eliminiert, welche dem Datensatz nicht entsprechen. Dabei können sowohl Geometrieelemente eliminiert werden, die in dem Datensatz nicht enthalten sind, als auch Geometrieelemente eliminiert werden, für die die in dem Datensatz definierte geometrische Beziehung der zumindest zwei Geometrieelemente in Bezug aufeinander nicht erfüllt ist. Alternativ oder zusätzlich zu der Eliminierung von Elementen können Elemente (d.h. Geometrieelemente) identifiziert werden, die dem Datensatz entsprechen und insbesondere solche Elemente, für die die in dem Datensatz definierte zumindest eine geometrische Beziehung der zumindest zwei Geometrieelemente in Bezug aufeinander erfüllt ist.

Insbesondere durch wiederholte Ausführung des Schritts S4 werden entweder so viele Geometrieelemente aus der Menge eliminiert, dass es für das Werkstück keine Übereinstimmung mit dem Datensatz mehr geben kann, oder es bleiben Geometrieelemente übrig und/oder werden identifiziert, für die auch die in dem Datensatz definierte zumindest eine geometrische Beziehung der zumindest zwei Geometrieelemente in Bezug auf einander gilt. Insbesondere können in der Menge der Geometrieelemente auch mehrere Gruppen von jeweils zumindest zwei Geometrieelementen verbleiben, für die jeweils die zumindest eine geometrische Beziehung gilt. Verbleibt nach Reduktion des Suchraumes durch zumindest eine Ausführung des Schritts S4 oder durch wiederholte Ausführung des Schritts S4 zumindest eine solche Gruppe, dann wurde der Datensatz aus dem Werkstück entsprechend identifiziert und kann das zumindest eine zugeordnete Prüfmerkmal in einen Prüfplan übernommen werden bzw. als zu dem Prüfplan gehörend bestätigt werden.

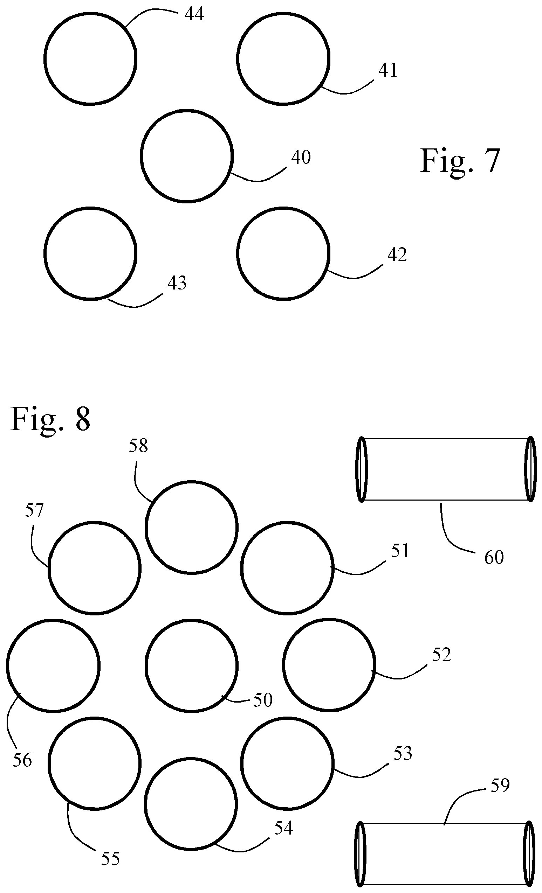

Anhand der Fig. 7 und 8 wird nun ein konkretes Ausführungsbeispiel der Schritte S3 und S4 für einen vorhandenen Datensatz und ein zu vermessendes Werkstück beschrieben. Gemäß dem vorhandenen Datensatz sind (wie Fig. 7 zeigt) fünf Zylinder als Geometrieelemente vorhanden. Jeder der Zylinder 40 bis 44 kann durch den Radius des dargestellten kreisförmigen Querschnitts und durch seine Länge (in einer Richtung senkrecht zur Figurenebene von Fig. 7, zum Beispiel definiert durch die Länge der Längsachse) beschrieben werden. Gemäß dem vorhandenen Datensatz haben die Zylinder 40 bis 44 die gleiche Orientierung im Raum, haben bezüglich eines ausgezeichneten Punktes (zum Beispiel des Anfangspunktes der Längsachse) in ihrer Längsrichtung die gleiche Position im Raum, haben gleich große Durchmesser bzw. Radien und haben in ihrer Längsrichtung die gleiche Länge. Außerdem haben die peripheren Zylinder 41 bis 44 den gleichen Abstand zum zentral gelegenen Zylinder 40 und haben jeweils den gleichen Abstand zu ihrem nächsten benachbarten Zylinder in der Peripherie des zentral gelegenen Zylinders 40. Zum Beispiel sind daher die Abstände der Zylinder 41, 42 zueinander und der Zylinder 43, 44 zueinander gleich groß. Dem Datensatz ist ferner ein auf die Positionen der Zylinder 40 bis 44 bezogenes Prüfmerkmal zugeordnet, das den Abstand der Zylinder zueinander betrifft. Es beinhaltet ferner, dass die Positionen der in der Peripherie gelegenen Zylinder 41 bis 44 um nicht mehr als ein vorgegebener Maximalwert (dessen Wert in dem Datensatz angegeben sein kann) der Positionstoleranz von ihrer Sollposition abweichen sollen.

Das zu vermessende Werkstück dagegen hat neun parallel zueinander ausgerichtete Zylinder 50 bis 58, wie Fig. 8 zeigt. Diese neun Zylinder 50 bis 58 haben ebenfalls die gleiche Orientierung im Raum, die gleiche Position in Richtung ihrer Längsachsen, den gleichen Durchmesser und die gleiche Länge. Ferner haben die in der Peripherie gelegenen Zylinder 51 bis 58 jeweils den gleichen Abstand zum im zentralen Bereich gelegenen Zylinder 50 und auch den gleichen Abstand zu ihrem nächst gelegenem, peripherem Zylinder. Zusätzlich sind zwei weitere Zylinder 59, 60 vorhanden, deren Längsachsen senkrecht zu den Längsachsen der neun Zylinder 50 bis 58 verlaufen.

Daher werden bei der Ausführung des Schritts S3 elf Geometrieelemente "Zylinder" für das zu vermessende Werkstück ermittelt. Bei Ausführung des Schritts S4 werden die neun Zylinder 50 bis 58 als dem vorhandenen Datensatz entsprechend identifiziert. Der zehnte Zylinder 59 und der elfte Zylinder 60 werden aus dem Suchraum der Geometrieelemente ausgeschlossen, da zu wenige der in dem vorgegebenen Datensatz definierten geometrischen Beziehungen auf diese Zylinder 59, 60 zutreffen. Insbesondere fehlt es an einem zentralen Zylinder. In der Praxis können bei dem zu vermessenden Werkstück noch weitere Geometrieelemente vorhanden sein, die entweder als einem anderen vorgegebenen Datensatz entsprechend identifiziert werden oder für sämtliche vorgegebene Datensätze jeweils aus deren Suchraum von Geometrieelementen entfernt werden.

Insbesondere ist es bei Ausführung des Schritts S4 möglich, dass zwischenzeitlich oder auch bis zum Abschluss der Ausführung des Schritts S4 zwei Teile des gesamten Suchraums vorhanden sind. In dem einen Teil befinden sich in dem Ausführungsbeispiel die neun Zylinder 50 bis 58. In dem anderen Teil befinden sich in dem Ausführungsbeispiel vorübergehend der zehnte Zylinder 59 und der elfte Zylinder 60. Aus diesem anderen Teil des Suchraums werden die Zylinder 59, 60 jedoch eliminiert, sobald festgestellt wird, dass unverzichtbare in dem vorgegebenen Datensatz definierte geometrische Beziehungen nicht auf sie zutreffen. Der andere Teil des Suchraums wird dadurch leer.

Es kann nun eine modifizierte Definition des vorhandenen Datensatzes geben, bei dem das zuvor Gesagte gilt und zusätzlich ein Betrag des Abstandes der in der Peripherie gelegenen Zylinder 41 bis 44 definiert ist, oder alternativ ein Verhältnis der Abstände der nächst benachbarten in der Peripherie gelegenen Zylinder 41 bis 44 zueinander zu dem Abstand dieser in der Peripherie gelegenen Zylinder 41 bis 44 zu dem zentral gelegenen Zylinder 40. In diesem Fall würden die neun Zylinder 50 bis 58 des zu vermessenden Werkstücks nicht alle in dem Datensatz definierten geometrischen Beziehungen der Geometrieelemente zueinander erfüllen, nämlich nicht das genannte zusätzlich definierte Merkmal. Allerdings würde eine Auswahl der neun Zylinder 50 bis 58 auch diesem vorhandenen Datensatz entsprechen, d. h. alle definierten geometrischen Beziehungen erfüllen. Bei dieser Auswahl handelt es sich um die Zylinder 50, 51, 53, 55 und 57. Bei entsprechender Ausgestaltung des Suchalgorithmus bzw. Identifizierungsalgorithmus zur Implementierung von Schritt S4 könnte daher auch diese Auswahl von Zylindern 50, 51, 53, 55 und 57 als dem vorhandenen Datensatz entsprechend identifiziert werden. Hierzu könnte der Algorithmus zum Beispiel einen Schritt enthalten, bei dem zu einem ersten in der Peripherie gelegenen Zylinder, z. B. Zylinder 53 ein weiterer Zylinder gesucht wird, der in der Peripherie zu dem zentralen Zylinder 50 liegt und der in dem durch den Datensatz spezifizierten Abstand zu dem ersten in der Peripherie gelegenen Zylinder liegt. Dies trifft in Bezug auf den Zylinder 53 für die Zylinder 51 und 55 zu. Für weitere Zylinder in der Peripherie müsste entsprechend vorgegangen werden. Anzumerken ist, dass nicht nur die oben genannte Auswahl von fünf Zylindern die modifizierte Definition des vorhandenen Datensatzes erfüllt, sondern auch die Auswahl der fünf Zylinder 50, 52, 54, 56, 58. In Schritt S4 werden daher diese beiden Auswahlen bzw. Gruppen von jeweils fünf Zylindern identifiziert.

Optional kann in Schritt S4 oder bei einer anderen Ausgestaltung des Verfahrens auch eine nicht vollständige Übereinstimmung mit dem vorhandenen Datensatz festgestellt werden, wenn die Geometrieelemente des zu vermessenden Werkstücks nicht alle geometrischen Beziehungen zueinander erfüllen, welche in dem Datensatz definiert sind. In Bezug auf das vorangegangene Beispiel mit der modifizierten Definition des vorhandenen Datensatzes kann beispielsweise auch in Bezug auf die neun Zylinder 50 bis 58 das Prüfergebnis ausgegeben werden, dass eine weitgehende Übereinstimmung mit den in dem Datensatz definierten geometrischen Beziehungen besteht, jedoch der Betrag des Abstandes der in der Peripherie gelegenen Zylinder 41 bis 44 nicht dem Datensatz entspricht. Das oben genannte zugeordnete Prüfmerkmal des Abstandes mit einer bestimmten Positionstoleranz kann auch in diesem Fall sinnvoll angewendet werden.

Dies ist ein Beispiel dafür, dass auch bei Abweichungen eines Werkstücks von der Definition in dem vorhandenen Datensatz das zumindest eine zugeordnete Prüfmerkmal in den Prüfplan aufgenommen werden kann bzw. dieses Prüfmerkmal in den Prüfplan bestätigt werden kann. Optional können geometrische Beziehungen in dem vorhandenen Datensatz gekennzeichnet sein, zum Beispiel als verzichtbar, wenn alle anderen geometrischen Beziehungen erfüllt sind, oder alternativ gekennzeichnet sein als unverzichtbar. Bei Nichterfüllung einer unverzichtbaren geometrischen Beziehung wird auch keine Übereinstimmung mit dem vorhandenen Datensatz festgestellt.

## Patentansprüche

1. Verfahren zum Vermessen eines zu vermessenden Werkstücks (31) mittels eines Koordinatenmessgeräts (1), wobei
- auf eine Datenbank (19) zugegriffen wird, in der eine Mehrzahl von Datensätzen gespeichert ist, die jeweils Daten aufweisen über:
a) zumindest zwei Geometrieelemente (24 bis 29), die ein Werkstück aufweisen kann,
b) zumindest eine geometrische Beziehung der zumindest zwei Geometrieelemente (24 bis 29) in Bezug aufeinander, wobei die geometrische Beziehung eine dimensionale Beziehung ist, die es somit erlaubt, bei einem zu vermessenden Werkstück durch Ermitteln und Auswerten von Koordinaten der zumindest zwei Geometrieelemente (24 bis 29) festzustellen, ob die geometrische Beziehung besteht,
c) zumindest ein den zumindest zwei Geometrieelementen (24 bis 29) zugeordnetes Prüfmerkmal, das in Bezug auf die zumindest zwei Geometrieelemente (24 bis 29) für ein zu prüfendes Werkstück (31) prüfbar ist,
- für ein zu vermessendes Werkstück (31) durch Auswertung von Messdaten des zu vermessenden Werkstücks (31) und/oder von Planungsdaten des zu vermessenden Werkstücks (31) Werkstückkoordinaten ermittelt werden,
- anhand der Werkstückkoordinaten festgestellt wird, ob das zu vermessende Werkstück die zumindest zwei Geometrieelemente (24 bis 29) und die zumindest eine geometrische Beziehung von zumindest einem der Mehrzahl von Datensätzen aufweist, und ein entsprechendes Feststellungsergebnis erzeugt wird,
- abhängig von dem Feststellungsergebnis in Bezug auf den jeweiligen Datensatz das zumindest eine zugeordnete Prüfmerkmal oder wenigstens eines der zugeordneten Prüfmerkmale in einen Prüfplan zur Vermessung des zu vermessenden Werkstücks (31) oder zur Vermessung eines typgleichen Werkstücks aufgenommen wird oder als Teil des Prüfplans bestätigt wird, **dadurch gekennzeichnet, dass**
- eine Mehrzahl der in der Datenbank (19) gespeicherten Datensätze ermittelt wird, die jeweils Datensatz-Geometrieelemente (24 bis 29) definieren, die derselben Mehrzahl von Geometrieelementen (24 bis 29) des zu vermessenden Werkstücks (31) entsprechen, und außerdem jeweils für diese Datensatz-Geometrieelemente (24 bis 29) die geometrische Beziehung definieren, wobei für jeden der Mehrzahl der ermittelten Datensätze ein Maß für eine Übereinstimmung der Geometrieelemente (24 bis 29) und der geometrischen Beziehung ermittelt wird und wobei anhand des Maßes der Übereinstimmung mindestens einer der Mehrzahl der ermittelten Datensätze als nicht übereinstimmend oder geringer übereinstimmend als zumindest ein anderer der Mehrzahl der ermittelten Datensätze ermittelt wird.

2. Verfahren nach Anspruch 1, wobei zumindest einer der Datensätze in der Datenbank (19) zusätzlich zu den Daten über das zumindest eine zugeordnete Prüfmerkmal eine die Durchführung der Vermessung des Werkstücks betreffende zusätzliche Information aufweist, oder einen Hinweis auf die zusätzliche Information aufweist, und wobei abhängig von dem Feststellungsergebnis die zusätzliche Information in den Prüfplan und/oder einen dem Prüfplan entsprechenden Messplan zur Vermessung des zu vermessenden Werkstücks (31) oder zur Vermessung eines typgleichen Werkstücks aufgenommen wird und/oder als Teil des Prüfplans bestätigt wird.

3. Verfahren nach Anspruch 1 oder 2, wobei bei der Feststellung, ob das zu vermessende Werkstück die zumindest zwei Geometrieelemente (24 bis 29) und die zumindest eine geometrische Beziehung von zumindest einem der Mehrzahl von Datensätzen aufweist, in Bezug auf einen der Datensätze zunächst festgestellt wird, ob das zu vermessende Werkstück alle Geometrieelemente (24 bis 29) aufweist, für die in dem Datensatz die geometrische Beziehung der Geometrieelemente (24 bis 29) in Bezug aufeinander definiert ist, und, wenn dies der Fall ist, danach ermittelt wird, ob die geometrische Beziehung bei den Geometrieelementen (24 bis 29) des zu vermessenden Werkstücks (31) besteht.

4. Verfahren nach einem der vorhergehenden Ansprüche, wobei aus der Mehrzahl der ermittelten Datensätze der Datensatz mit dem höchsten Maß der Übereinstimmung ausgewählt wird und von diesem ausgewählten Datensatz das zumindest eine zugeordnete Prüfmerkmal oder wenigstens eines der zugeordneten Prüfmerkmale in den Prüfplan zur Vermessung des zu vermessenden Werkstücks oder zur Vermessung eines typgleichen Werkstücks aufgenommen wird oder als Teil des Prüfplans bestätigt wird.

5. Verfahren nach einem der vorhergehenden Ansprüche, wobei das zu vermessende Werkstück (31) mittels zumindest eines Koordinatenmessgeräts (1) vermessen wird und die Messdaten erzeugt werden, um die Werkstückkoordinaten zu ermitteln.

6. Verfahren nach einem der vorhergehenden Ansprüche, wobei das zu vermessende Werkstück (31) oder ein typgleiches Werkstück entsprechend dem Prüfplan mittels zumindest eines Koordinatenmessgeräts (1) vermessen wird und/oder ein Wert des in den Prüfplan aufgenommenen oder als Teil des Prüfplans bestätigten Prüfmerkmals ermittelt wird.

7. Computerprogramm, umfassend Befehle, die bei der Ausführung des Programms durch einen Computer oder durch eine Anordnung von Computern diesen/diese veranlassen, das Verfahren nach einem der Ansprüche 1 bis 4 auszuführen.

8. Computerlesbares Medium, umfassend Befehle, die bei der Ausführung durch einen Computer oder durch eine Anordnung von Computern diesen/diese veranlassen, das Verfahren nach einem der Ansprüche 1 bis 4 auszuführen.

9. Vorrichtung zur Durchführung des Verfahrens nach einem der vorhergehenden Ansprüche, wobei die Vorrichtung aufweist:
- eine Zugriffseinrichtung (15), die ausgestaltet ist auf eine Datenbank (19) zuzugreifen, in der eine Mehrzahl von Datensätzen gespeichert ist, die jeweils Daten aufweisen über:
a) zumindest zwei Geometrieelemente (24 bis 29), die ein Werkstück aufweisen kann,
b) zumindest eine geometrische Beziehung der zumindest zwei Geometrieelemente (24 bis 29) in Bezug aufeinander, wobei die geometrische Beziehung eine dimensionale Beziehung ist, die es somit erlaubt, bei einem zu vermessenden Werkstück durch Ermitteln und Auswerten von Koordinaten der zumindest zwei Geometrieelemente (24 bis 29) festzustellen, ob die geometrische Beziehung besteht,
c) zumindest ein den zumindest zwei Geometrieelementen (24 bis 29) zugeordnetes Prüfmerkmal, das in Bezug auf die zumindest zwei Geometrieelemente (24 bis 29) für das Werkstück prüfbar ist,
- eine Auswertungseinrichtung (13), die ausgestaltet ist, für ein zu vermessendes Werkstück durch Auswertung von Messdaten des zu vermessenden Werkstücks (31) und/oder von Planungsdaten des zu vermessenden Werkstücks (31) Werkstückkoordinaten zu ermitteln,
- eine Feststellungeinrichtung (16), die ausgestaltet ist, anhand der Werkstückkoordinaten festzustellen, ob das zu vermessende Werkstück die zumindest zwei Geometrieelemente (24 bis 29) und die zumindest eine geometrische Beziehung von zumindest einem der Mehrzahl von Datensätzen aufweist, und ein entsprechendes Feststellungsergebnis zu erzeugen und
- eine Prüfplaneinrichtung (18), die ausgestaltet ist, abhängig von dem Feststellungsergebnis in Bezug auf den jeweiligen Datensatz das zumindest eine zugeordnete Prüfmerkmal oder wenigstens eines der zugeordneten Prüfmerkmale in einen Prüfplan zur Vermessung des zu vermessenden Werkstücks (31) oder zur Vermessung eines typgleichen Werkstücks aufzunehmen oder als Teil des Prüfplans zu bestätigen,
**dadurch gekennzeichnet, dass**
die Vorrichtung ausgestaltet ist, eine Mehrzahl der in der Datenbank (19) gespeicherten Datensätze zu ermitteln, die jeweils Datensatz-Geometrieelemente (24 bis 29) definieren, die derselben Mehrzahl von Geometrieelementen (24 bis 29) des zu vermessenden Werkstücks (31) entsprechen, und außerdem jeweils für diese Datensatz-Geometrieelemente (24 bis 29) die geometrische Beziehung definieren, wobei die Vorrichtung ferner ausgestaltet ist, für jeden der Mehrzahl der ermittelten Datensätze ein Maß für eine Übereinstimmung der Geometrieelemente (24 bis 29) und der geometrischen Beziehung zu ermitteln und anhand des Maßes der Übereinstimmung mindestens einen der Mehrzahl der ermittelten Datensätze als nicht übereinstimmend oder geringer übereinstimmend als zumindest ein anderer der Mehrzahl der ermittelten Datensätze zu ermitteln.

10. Vorrichtung nach Anspruch 9, wobei die Vorrichtung ausgestaltet ist, aus der Mehrzahl der ermittelten Datensätze den Datensatz mit dem höchsten Maß der Übereinstimmung auszuwählen und von diesem ausgewählten Datensatz das zumindest eine zugeordnete Prüfmerkmal oder wenigstens eines der zugeordneten Prüfmerkmale in den Prüfplan zur Vermessung des zu vermessenden Werkstücks oder zur Vermessung eines typgleichen Werkstücks aufzunehmen oder als Teil des Prüfplans zu bestätigen.

11. Anordnung mit einer Vorrichtung nach Anspruch 9 oder 10, wobei die Anordnung ferner aufweist:
- zumindest ein Koordinatenmessgerät (1), das ausgestaltet ist, die Vermessung des oder der Werkstücke auszuführen und entsprechende Messdaten zu erzeugen, und/oder
- die Datenbank (19) mit der Mehrzahl der Datensätze.

## Claims

1. Method of using a coordinate measuring machine (1) to measure a workpiece (31) to be measured, wherein
- a database (19) is accessed in which a plurality of data records are stored, each containing data on:
a) at least two geometric elements (24 to 29) which a workpiece might contain,
b) at least one geometric relationship of the at least two geometric elements (24 to 29) in relation to one another, the geometric relationship being a dimensional relationship thus allowing determination as to whether the geometric relationship exists in a workpiece to be measured, by way of ascertaining and evaluating coordinates of the at least two geometric elements (24 to 29),
c) at least one test feature assigned to the at least two geometric elements (24 to 29), said at least one test feature being testable with respect to the at least two geometric elements (24 to 29) for a workpiece (31) to be tested,
- workpiece coordinates are ascertained for a workpiece (31) to be measured, by evaluating measurement data of the workpiece (31) to be measured and/or planning data of the workpiece (31) to be measured,
- the workpiece coordinates are used to determine whether the workpiece to be measured contains the at least two geometric elements (24 to 29) and the at least one geometric relationship of at least one of the plurality of data records, and a corresponding determination result is created,
- depending on the determination result in relation to the respective data record, the at least one assigned test feature or at least one of the assigned test features is incorporated in a test plan for measuring the workpiece (31) to be measured or for measuring a workpiece of the same type or is confirmed as part of the test plan, **characterized in that**
- there is an ascertainment of a plurality of the data records stored in the database (19), which each define data record geometric elements (24 to 29) corresponding to the same plurality of geometric elements (24 to 29) of the workpiece (31) to be measured and which also each define the geometric relationship for these data record geometric elements (24 to 29), wherein a measure for a correspondence of the geometric elements (24 to 29) and the geometric relationship is ascertained for each of the plurality of ascertained data records and wherein the measure of correspondence is used to ascertain at least one of the plurality of ascertained data records as non-corresponding or having a lower correspondence than at least one other data record of the plurality of ascertained data records.

2. Method according to Claim 1, wherein at least one of the data records in the database (19) contains, besides the data on the at least one assigned test feature, additional information concerning the implementation of the measurement of the workpiece or a reference regarding the additional information and wherein, depending on the determination result, the additional information is incorporated in the test plan and/or a measurement plan, corresponding to the test plan, for measuring the workpiece (31) to be measured or for measuring a workpiece of the same type and/or is confirmed as part of the test plan.

3. Method according to Claim 1 or 2, wherein, when determining whether the workpiece to be measured contains the at least two geometric elements (24 to 29) and the at least one geometric relationship of at least one of the plurality of data records, there is an initial determination with respect to one of the data records as to whether the workpiece to be measured contains all the geometric elements (24 to 29) for which the geometric relationship of the geometric elements (24 to 29) is defined in relation to one another in the data record and, if so, there is a subsequent determination as to whether the geometric relationship exists for the geometric elements (24 to 29) of the workpiece (31) to be measured.

4. Method according to any of the preceding claims, wherein the data record with the highest measure of correspondence is selected from the plurality of ascertained data records and the at least one assigned test feature or at least one of the assigned test features of this selected data record is incorporated in the test plan for measuring the workpiece to be measured or for measuring a workpiece of the same type or is confirmed as part of the test plan.

5. Method according to any of the preceding claims, wherein the workpiece (31) to be measured is measured by means of at least one coordinate measuring machine (1), and the measurement data are created to ascertain the workpiece coordinates.

6. Method according to any of the preceding claims, wherein the workpiece (31) to be measured or a workpiece of the same type is measured by means of at least one coordinate measuring machine (1) according to the test plan, and/or a value of the test feature incorporated in the test plan or confirmed as part of the test plan is ascertained.

7. Computer program comprising commands that, upon execution of the program by a computer or by an arrangement of computers, prompt the said computer or arrangement of computers to carry out the method according to any of Claims 1 to 4.

8. Computer-readable storage medium comprising commands that, upon execution by a computer or by an arrangement of computers, prompt the said computer or arrangement of computers to carry out the method according to any of Claims 1 to 4.

9. Apparatus for carrying out the method according to any of the preceding claims, wherein the apparatus comprises:
- an access device (15) configured to access a database (19) in which a plurality of data records are stored, each containing data on:
a) at least two geometric elements (24 to 29) which a workpiece might contain,
b) at least one geometric relationship of the at least two geometric elements (24 to 29) in relation to one another, the geometric relationship being a dimensional relationship thus allowing determination as to whether the geometric relationship exists in a workpiece to be measured, by way of ascertaining and evaluating coordinates of the at least two geometric elements (24 to 29),
c) at least one test feature assigned to the at least two geometric elements (24 to 29), said at least one test feature being testable with respect to the at least two geometric elements (24 to 29) for the workpiece,
- an evaluation device (13) configured to ascertain workpiece coordinates for a workpiece to be measured, by evaluating measurement data of the workpiece (31) to be measured and/or planning data of the workpiece (31) to be measured,
- a determination device (16) configured to use the workpiece coordinates to determine whether the workpiece to be measured contains the at least two geometric elements (24 to 29) and the at least one geometric relationship of at least one of the plurality of data records, and to create a corresponding determination result, and
- a test plan device (18) configured, depending on the determination result in relation to the respective data record, to incorporate the at least one assigned test feature or at least one of the assigned test features in a test plan for measuring the workpiece (31) to be measured or for measuring a workpiece of the same type or to confirm this as part of the test plan,
**characterized in that**
the apparatus is configured to ascertain a plurality of the data records stored in the database (19), which each define data record geometric elements (24 to 29) corresponding to the same plurality of geometric elements (24 to 29) of the workpiece (31) to be measured and which also each define the geometric relationship for these data record geometric elements (24 to 29), wherein the apparatus is further configured to ascertain a measure for a correspondence of the geometric elements (24 to 29) and the geometric relationship for each of the plurality of ascertained data records and to use the measure of correspondence to ascertain at least one of the plurality of ascertained data records as non-corresponding or having a lower correspondence than at least one other data record of the plurality of ascertained data records.

10. Apparatus according to Claim 9, wherein the apparatus is configured to select the data record with the highest measure of correspondence from the plurality of ascertained data records and to incorporate the at least one assigned test feature or at least one of the assigned test features of this selected data record in the test plan for measuring the workpiece to be measured or for measuring a workpiece of the same type or to confirm this as part of the test plan.

11. Arrangement having an apparatus according to Claim 9 or 10, wherein the arrangement further comprises:
- at least one coordinate measuring machine (1) configured to carry out the measurement of the workpiece(s) and to create corresponding measurement data, and/or
- the database (19) with the plurality of the data records.

## Revendications

1. Procédé de mesure d'une pièce (31) à mesurer au moyen d'un appareil de mesure de coordonnées (1), dans lequel
- un accès est effectué à une base de données (19) dans laquelle sont stockés une pluralité d'ensembles de données qui comportent respectivement des données concernant :
a) au moins deux éléments de géométrie (24 à 29) que peut présenter une pièce,
b) au moins une relation géométrique desdits au moins deux éléments de géométrie (24 à 29) l'un par rapport à l'autre, la relation géométrique étant une relation dimensionnelle permettant ainsi, pour une pièce à mesurer, d'établir, par détermination et évaluation de coordonnées desdits au moins deux éléments de géométrie (24 à 29), si la relation géométrique existe,
c) au moins une caractéristique de contrôle associée auxdits au moins deux éléments de géométrie (24 à 29), laquelle peut être contrôlée relativement auxdits au moins deux éléments de géométrie (24 à 29) pour une pièce (31) à contrôler,
- pour une pièce (31) à mesurer, des coordonnées de pièce sont déterminées par évaluation de données de mesure de la pièce (31) à mesurer et/ou de données de planification de la pièce (31) à mesurer,
- il est établi, sur la base des coordonnées de pièce, si la pièce à mesurer présente lesdits au moins deux éléments de géométrie (24 à 29) et ladite au moins une relation géométrique d'au moins l'un de la pluralité d'ensembles de données, et un résultat d'établissement correspondant est généré,
- en fonction du résultat d'établissement relatif à l'ensemble de données respectif, ladite au moins une caractéristique de contrôle associée ou au moins l'une des caractéristiques de contrôle associées est incluse dans un plan de contrôle pour la mesure de la pièce (31) à mesurer ou pour la mesure d'une pièce de même type, ou est confirmée en tant que partie du plan de contrôle, **caractérisé en ce que**
- une pluralité des ensembles de données stockés dans la base de données (19) sont déterminés, lesquels définissent respectivement des éléments de géométrie d'ensemble de données (24 à 29) correspondant à la même pluralité d'éléments de géométrie (24 à 29) de la pièce (31) à mesurer, et définissent en outre respectivement la relation géométrique pour ces éléments de géométrie d'ensemble de données (24 à 29), dans lequel, pour chacun de la pluralité d'ensembles de données, une mesure d'une concordance entre les éléments de géométrie (24 à 29) et la relation géométrique est déterminée, et dans lequel, sur la base de la mesure de la concordance, au moins l'un de la pluralité d'ensembles de données déterminés est déterminé comme ne présentant aucune concordance ou une concordance moindre qu'au moins un autre de la pluralité d'ensembles de données déterminés.

2. Procédé selon la revendication 1, dans lequel au moins l'un des ensembles de données de la base de données (19) présente, en plus des données concernant ladite au moins une caractéristique de contrôle associée, une information supplémentaire concernant la réalisation de la mesure de la pièce, ou une indication relative à l'information supplémentaire, et dans lequel, en fonction du résultat d'établissement, l'information supplémentaire est incluse dans le plan de contrôle et/ou dans un plan de mesure correspondant au plan de contrôle pour la mesure de la pièce (31) à mesurer ou pour la mesure d'une pièce de même type, et/ou est confirmée en tant que partie du plan de contrôle.

3. Procédé selon la revendication 1 ou 2, dans lequel, lorsqu'il est établi si la pièce à mesurer présente lesdits au moins deux éléments de géométrie (24 à 29) et ladite au moins une relation géométrique d'au moins l'un de la pluralité d'ensembles de données, il est d'abord établi, relativement à l'un des ensembles de données, si la pièce à mesurer présente tous les éléments de géométrie (24 à 29) pour lesquels la relation géométrique des éléments de géométrie (24 à 29) les uns par rapport aux autres est définie dans l'ensemble de données, et, si tel est le cas, il est ensuite déterminé si la relation géométrique existe pour les éléments de géométrie (24 à 29) de la pièce (31) à mesurer.

4. Procédé selon l'une des revendications précédentes, dans lequel, parmi la pluralité d'ensembles de données déterminés, l'ensemble de données présentant la mesure de concordance la plus élevée est sélectionné, et ladite au moins une caractéristique de contrôle associée ou au moins l'une des caractéristiques de contrôle associées de cet ensemble de données sélectionné est incluse dans le plan de contrôle pour la mesure de la pièce à mesurer ou pour la mesure d'une pièce de même type, ou est confirmée en tant que partie du plan de contrôle.

5. Procédé selon l'une des revendications précédentes, dans lequel la pièce (31) à mesurer est mesurée au moyen d'au moins un appareil de mesure de coordonnées (1) et les données de mesure sont générées pour déterminer les coordonnées de la pièce.

6. Procédé selon l'une des revendications précédentes, dans lequel la pièce (31) à mesurer ou une pièce de même type est mesurée conformément au plan de contrôle au moyen d'au moins un appareil de mesure de coordonnées (1) et/ou une valeur de la caractéristique de contrôle incluse dans le plan de contrôle ou confirmée en tant que partie du plan de contrôle est déterminée.

7. Programme d'ordinateur comprenant des instructions qui, lors de l'exécution du programme par un ordinateur ou par un agencement d'ordinateurs, amènent celui-ci à mettre en œuvre le procédé selon l'une des revendications 1 à 4.

8. Support lisible par ordinateur, comprenant des instructions qui, lors de leur exécution par un ordinateur ou par un agencement d'ordinateurs, amènent celui-ci ou ceux-ci à mettre en œuvre le procédé selon l'une des revendications 1 à 4.

9. Dispositif pour la mise en œuvre du procédé selon l'une des revendications précédentes, le dispositif comportant :
- un équipement d'accès (15) configuré pour accéder à une base de données (19) dans laquelle sont stockés une pluralité d'ensembles de données qui comportent respectivement des données concernant :
a) au moins deux éléments de géométrie (24 à 29) que peut présenter une pièce,
b) au moins une relation géométrique desdits au moins deux éléments de géométrie (24 à 29) l'un par rapport à l'autre, la relation géométrique étant une relation dimensionnelle permettant ainsi, pour une pièce à mesurer, d'établir, par détermination et évaluation de coordonnées desdits au moins deux éléments de géométrie (24 à 29), si la relation géométrique existe,
c) au moins une caractéristique de contrôle associée auxdits au moins deux éléments de géométrie (24 à 29), laquelle peut être contrôlée relativement auxdits au moins deux éléments de géométrie (24 à 29) pour la pièce,
- un équipement d'évaluation (13) configuré pour obtenir, pour une pièce à mesurer, des coordonnées de pièce par évaluation de données de mesure de la pièce (31) à mesurer et/ou de données de planification de la pièce (31) à mesurer,
- un équipement d'établissement (16) configuré pour établir, sur la base des coordonnées de pièce, si la pièce à mesurer présente lesdits au moins deux éléments de géométrie (24 à 29) et ladite au moins une relation géométrique d'au moins l'un de la pluralité d'ensembles de données, et pour générer un résultat d'établissement correspondant, et
- un équipement de plan de contrôle (18) configuré pour, en fonction du résultat d'établissement relatif à l'ensemble de données respectif, inclure ladite au moins une caractéristique de contrôle associée ou au moins l'une des caractéristiques de contrôle associées dans un plan de contrôle pour la mesure de la pièce (31) à mesurer ou pour la mesure d'une pièce de même type, ou pour la confirmer en tant que partie du plan de contrôle,
**caractérisé en ce que**
le dispositif est configuré pour déterminer une pluralité d'ensembles de données stockés dans la base de données (19), lesquels définissent respectivement des éléments de géométrie d'ensemble de données (24 à 29) correspondant à la même pluralité d'éléments de géométrie (24 à 29) de la pièce (31) à mesurer, et définissent en outre respectivement la relation géométrique pour ces éléments de géométrie d'ensemble de données (24 à 29), le dispositif étant en outre configuré pour déterminer, pour chacun de la pluralité d'ensembles de données déterminés, une mesure d'une concordance entre les éléments de géométrie (24 à 29) et la relation géométrique, et pour déterminer, sur la base de la mesure de la concordance, au moins l'un de la pluralité d'ensembles de données déterminés comme ne présentant aucune concordance ou une concordance moindre qu'au moins un autre de la pluralité d'ensembles de données déterminés.

10. Dispositif selon la revendication 9, le dispositif étant configuré sélectionner, parmi la pluralité d'ensembles de données déterminés, l'ensemble de données présentant la mesure de concordance la plus élevée et, à partir de cet ensemble de données sélectionné, pour inclure ladite au moins une caractéristique de contrôle associée ou au moins l'une des caractéristiques de contrôle associées dans le plan de contrôle pour la mesure de la pièce à mesurer ou pour la mesure d'une pièce de même type, ou pour la confirmer en tant que partie du plan de contrôle.

11. Agencement comprenant un dispositif selon la revendication 9 ou 10, l'agencement comportant en outre :
- au moins un appareil de mesure de coordonnées (1) configuré pour effectuer la mesure de la ou des pièces et pour générer des données de mesure correspondantes, et/ou
- la base de données (19) comprenant la pluralité d'ensembles de données.
